# EUROPEAN PATENT APPLICATION

(11) **EP 4 480 810 A1**
(43) Date of publication of application: **25.12.2024**
(21) Application number: 24170815.5
(22) Date of filing: 17.04.2024
(51) Int. Cl.: B64C 1/06, B64F 5/10

(54) **SYSTEMS AND METHODS FOR SHIMLESS ASSEMBLY AND JOINT SPLICES**

(30) Priority: 21.06.2023 US 202363509384 P; 20.03.2024 US 202418610593
(71) Applicant: The Boeing Company, Arlington, VA 22202 (US)
(72) Inventor: TATAR, Monica, Arlington, 22202 (US)
(74) Representative: Sandri, Sandro

(57) **Abstract**

A method for joining structures includes steps of: (1) fabricating a splice based on measurements of a first-structure surface of a first structure and a second-structure surface of a second structure along a joint formed between the first structure and the second structure; (2) installing the splice using a plurality of verification holes formed in the first structure, the second structure, and the splice; and (3) self-verifying that a gap between a splice surface of the splice and each one of the first-structure surface and the second-structure surface is less than or equal to a maximum allowable dimension of the gap by installing the splice.

## Description

### PRIORITY

This application claims priority from U.S. Ser. No. 63/509,384 filed on June 21, 2023.

### FIELD

The present disclosure relates generally to assembly manufacturing and, more particularly, to systems and methods for shimless assembly of fuselage barrel sections and circumferential joint splices used to assemble fuselage barrel sections without shimming.

### BACKGROUND

An airframe defines the mechanical structure of an aircraft. Airframes are made of multiple components that provide desired structural properties for the aircraft. For example, a fuselage of an aircraft often includes barrel sections that are joined together along a circumferential splice joint. Each of the barrel sections may include frames, skin, and stringers that are mechanically coupled together. To install the splice joint, the barrel sections are aligned, and attachment holes are drilled through a connecting splice (e.g., a frame, a bulkhead, or a splice plate) and the underlying barrel structures. Often, additional fittings and/or shims are required to account for deviations in surface profiles and/or to fill any gaps between faying surfaces. The attachment holes must also be drilled through the fittings and/or shims. Finally, after installation, the splice joint must be manually inspected to ensure that every gap and shim is within an acceptable dimensional tolerance. Ultimately, this is a time-intensive and labor-intensive process. Accordingly, those skilled in the art continue with research and development efforts in the field of assembly manufacturing and, more particularly, in the field of aircraft fuselage assembly manufacturing.

### SUMMARY

Disclosed are examples of an assembly method for joining structures, an assembly system for joining structures, a manufacturing method for manufacturing a splice; a manufacturing system for manufacturing a splice used to join structures, a splice for joining structures, an assembly method for joining barrel sections of a fuselage of an aircraft, an assembly system for joining a fuselage of an aircraft, a computer program product, a data processing system, and a computer-readable media. The following is a non-exhaustive list of examples, which may or may not be claimed, of the subject matter according to the present disclosure.

In an example, the disclosed assembly method includes steps of: (1) fabricating a splice based on measurements of a first-structure surface of a first structure and a second-structure surface of a second structure along a joint formed between the first structure and the second structure; (2) installing a splice using a plurality of verification holes formed in the first structure, the second structure, and the splice; and (3) self-verifying that a gap between a splice surface of the splice and each one of the first-structure surface and the second-structure surface is less than or equal to a maximum allowable dimension of the gap by installing the splice.

In an example, the disclosed assembly system includes a metrology device that is operable to measure a first-structure surface of a first structure and a second-structure surface of a second structure. The assembly system includes a computer numerical control machine that is operable to fabricate a splice based on measurements of the first-structure surface and the second-structure surface along a virtual joint formed between the first structure and the second structure. The splice is installed using a plurality of verification holes formed in the first structure, the second structure, and the splice. Upon installing the splice, a gap between a splice surface of the splice and each one of the first-structure surface and the second-structure surface is less than or equal to a maximum allowable dimension of the gap. With all gaps being less than or equal to the maximum allowable dimension, no shims are required for the assembled structure and gap verification is not required (e.g., via a filler gauge or hole inspection).

In an example, the disclosed manufacturing method includes steps of: (1) measuring structure-surface profiles of a first-structure surface of a first structure and a second-structure surface of a second structure; (2) measuring structure-verification-hole diameters of structure-verification holes in the first structure and the second structure; (3) measuring structure-verification-hole locations of the structure-verification holes; (4) measuring structure-verification-hole axis vectors of the structure-verification holes; (5) machining a splice surface of the splice that is complementary to the structure-surface profiles of the first-structure surface and the second-structure surface; and (6) machining a plurality of splice-verification holes in the splice such that the splice-verification holes include: splice-verification-hole diameters that are equal to the structure-verification-hole diameters of the structure-verification holes; splice-verification-hole locations that correspond to the structure-verification-hole locations of the structure-verification holes; and splice-verification-hole axis vectors that are equal to the structure-verification-hole axis vectors of the structure-verification holes.

In an example, the disclosed manufacturing system includes a metrology device that is operable to measure a first-structure surface of a first structure and a second-structure surface of a second structure. The manufacturing system includes a computer that is programmed to analyze measurements from the metrology device. The computer is programed to determine structure-surface profiles of the first-structure surface and the second-structure surface. The computer is programed to determine structure-verification-hole diameters of structure-verification holes in the first structure and the second structure. The computer is programed to determine structure-verification-hole locations of the structure-verification holes in the first structure and the second structure. The computer is programed to determine structure-verification-hole axis vectors of the structure-verification holes in the first structure and the second structure. The manufacturing system includes a computer numerical control machine that is operable to machine a splice surface of the splice that is complementary to the structure-surface profiles of the first-structure surface and the second-structure surface. The computer numerical control machine is operable to machine a plurality of splice-verification holes in the splice. The plurality of splice-verification holes includes splice-verification-hole diameters that are equal to the structure-verification-hole diameters of the structure-verification holes. The plurality of splice-verification holes includes splice-verification-hole locations that correspond to the structure-verification-hole locations of the structure-verification holes. The plurality of splice-verification holes includes splice-verification-hole axis vectors that are equal to the structure-verification-hole axis vectors of the structure-verification holes. As such, the system provides profile tolerance and vector measurement.

In an example, the disclosed splice is fabricating using the manufacturing system or according to the manufacturing method.

In an example, the disclosed computer program product includes instructions that, when executed by a computer, cause the computer to carry out the steps of the manufacturing method.

In an example, the disclosed data processing system includes means for carrying out the manufacturing method.

In an example, the disclosed computer-readable media includes program code that, when executed by a processor, causes the processor to carry out the manufacturing method.

In another example, the disclosed splice includes a splice body and a plurality of splice arms that extend from the splice body, also referred to as an integrated splice. The splice includes a plurality of splice-verification holes formed through the splice body and one or more of the splice arms. The splice includes a splice surface that is formed by the splice body and the splice arms. The splice surface is complementary to structure-surface profiles of structure surfaces of the structures along a j oint between the structures. The splice-verification holes include splice-verification-hole diameters that are equal to structure-verification-hole diameters of structure-verification holes formed through the structures. The splice-verification holes include splice-verification-hole locations that correspond to structure-verification-hole locations of the structure-verification holes formed through the structures. The splice-verification holes include splice-verification-hole axis vectors that are equal to structure-verification-hole axis vectors of the structure-verification holes formed through the structures. The splice is configured to be installed along the joint between the structures by aligning the splice-verification holes with the structure-verification holes. When installed, the splice self-verifies that a gap between the splice surface of the splice and the structure surfaces of the structures is less than or equal to a maximum allowable dimension of the gap.

In another example, the disclosed assembly method includes steps of: (1) fabricating a splice based on measurements of a first-barrel-section surface of a first-barrel section and a second-barrel-section surface of a second-barrel section along a joint formed between the first-barrel section and the second-barrel section; (2) installing the splice using a plurality of verification holes formed in the first-barrel section, the second-barrel section, and the splice; and (3) self-verifying that a gap between a splice surface of the splice and each one of the first-barrel-section surface and the second-barrel-section surface is less than or equal to a maximum allowable dimension of the gap by installing the splice.

In another example, the disclosed assembly system includes a metrology device that is operable to measure a first-barrel-section surface of a first-barrel section and a second-barrel-section surface of a second-barrel section and virtually index the first-barrel section and the second-barrel section. The assembly system includes a computer numerical control machine that is operable to fabricate a splice based on measurements of the first-barrel-section surface and the second-barrel-section surface along a joint formed between the first-barrel section and the second-barrel section. The splice is installed using a plurality of verification holes formed in the first-barrel section, the second-barrel section, and the splice. Upon installing the splice, a gap between a splice surface of the splice and each one of the first-barrel-section surface and the second-barrel-section surface is less than or equal to a maximum allowable dimension of the gap, which is measured via hole misalignment values.

In another example, the disclosed fuselage of an aircraft is assembled using the examples of the assembly system or according to the examples of the assembly method.

Other examples of the assembly methods, the assembly systems, the apparatus, the data processing system, the computer program product, and the computer-readable storage media disclosed herein will become apparent from the following detailed description, the accompanying drawings, and the appended claims.

### BRIEF DESCRIPTION OF THE DRAWINGS

Fig. 1 is a schematic illustration of an example of a first structure and a second structure in a pre-assembly position;
Fig. 2 is a schematic illustration of an example of the first structure and the second structure in an assembly position;
Fig. 3 is a schematic illustration of an example of the first structure and a portion of the second structure in the assembly position;
Fig. 4A is a schematic illustration of an example of a portion of the first structure;
Fig. 4B is a schematic illustration of an example of a portion of the second structure;
Fig. 4C is a schematic illustration of an example of a splice for joining the first structure and the second structure;
Fig. 5 is a schematic illustration of an example of a portion of a splice joint between the first structure and the second structure;
Fig. 6 is a schematic, perspective view of an example of a portion of the splice joint;
Fig. 7 is a schematic, exploded, perspective view of an example of a portion of the splice joint;
Fig. 8 is a schematic, elevation view of an example of a portion of the splice joint;
Fig. 9 is a schematic, sectional view of an example of a portion of the splice joint;
Fig. 10 is a flow diagram of an example of a method for joining structures;
Fig. 11 is a flow diagram of an example of a method for manufacturing a splice used to join structures;
Figs. 12 is a flow diagram of an example of a method for joining barrel sections of a fuselage of an aircraft;
Figs. 13A and 13B, in combination, are a schematic block diagram of an example of a manufacturing environment;
Fig. 14 is a schematic block diagram of an example of a data processing system;
Fig. 15 is a flow diagram of an example of an aircraft manufacturing and service method; and
Fig. 16 is a schematic block diagram of an example of an aircraft.

### DETAILED DESCRIPTION

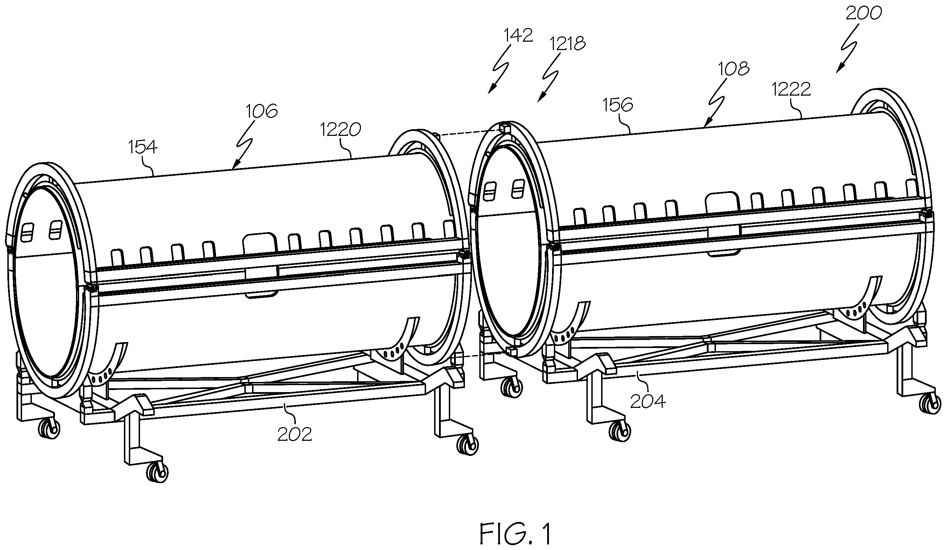

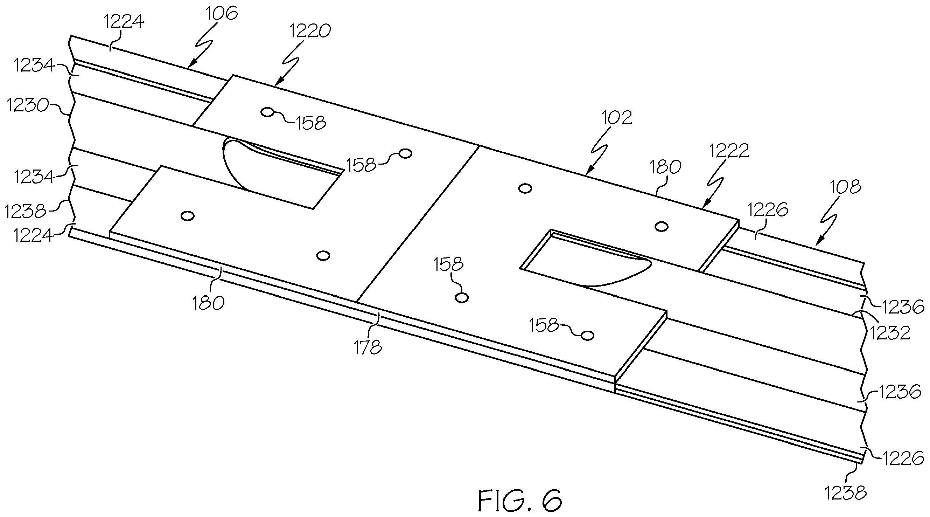

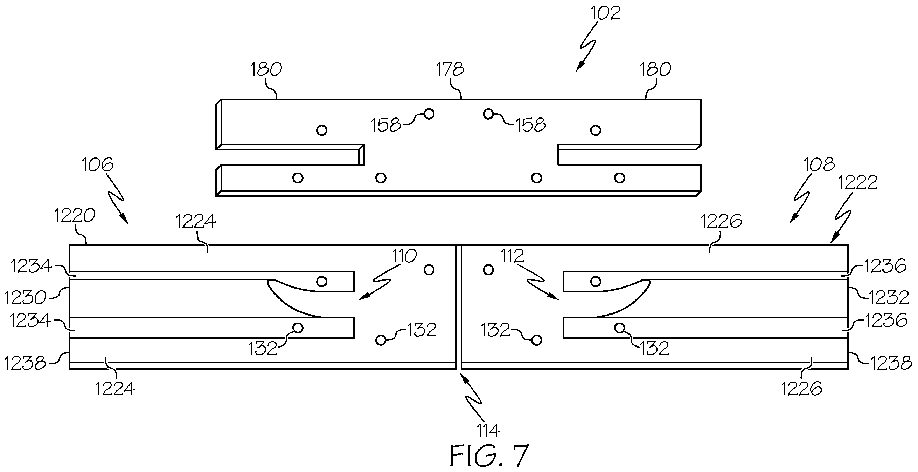

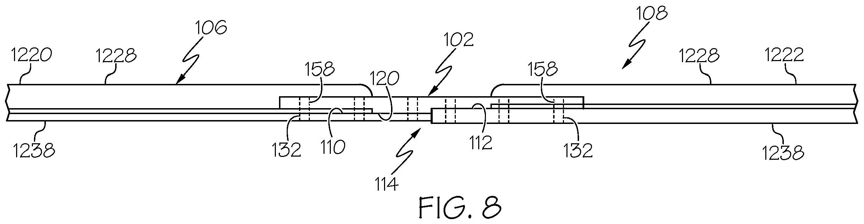

Referring generally to Figs. 1-14, by way of examples, the present disclosure is directed to systems and methods for joining structures using a splice. The present disclosure is also directed to splices used to join structures. The present disclosure is further directed to systems and methods for fabricating the splices used to joint structures.

The systems and methods disclosed herein facilitate high-rate assembly and a significant reduction in fastening and shimming required during assembly. As such, the disclosed systems and methods are highly advantageous in the aerospace industry. As an example, the disclosed systems and methods facilitate a reduction in fuselage assembly time. As another example, the disclosed systems and methods facilitate the manufacture and installation of a consistent and repeatable splice joint between fuselage barrel sections using precision full-size determinate assembly holes and shimless assembly. As another example, the disclosed systems and methods facilitate the manufacture of a precision splice that self-verifies gap tolerances by virtue of its installation in a splice joint.

Generally, as will be described in more detail herein, the shimless assembly systems and methods include pre-drilling holes in fuselage barrel sections, scanning surfaces of the fuselage barrel sections, precision machining a splice that corresponds to the scanned surfaces within a specified tolerance (e.g., within 0.005 inch), and installing the splice to assemble the splice joint and join the fuselage barrel sections. In various examples, the pre-drilled holes are full size holes, which are used as verification holes during assembly, rather than pilot holes.

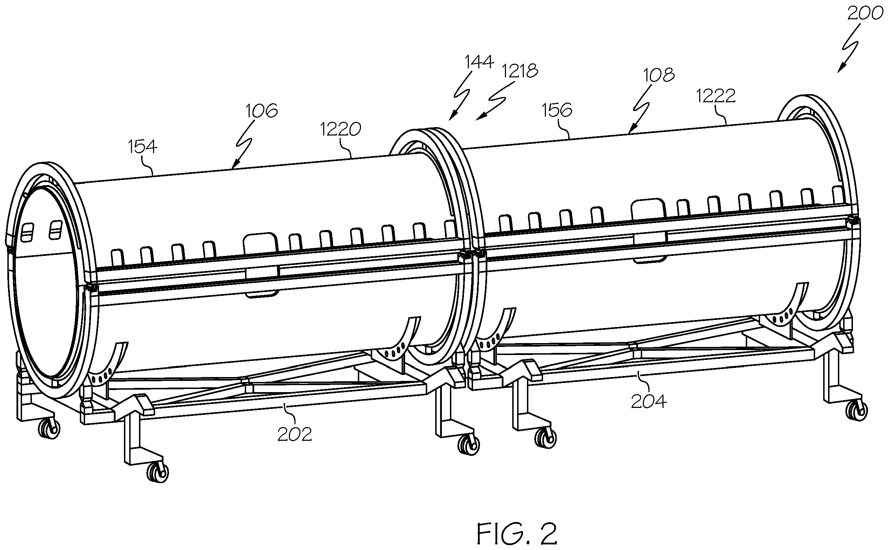

Figs. 1 and 2 schematically illustrate an example of structures 176 (e.g., a first structure 106 and a second structure 108) to be joined together. In the example illustrated in Fig. 1, the structures 176 are positioned or otherwise aligned in a pre-assembly position 142. In the example illustrated in Fig. 2, the structures 176 are positioned or otherwise aligned in an assembly position 144.

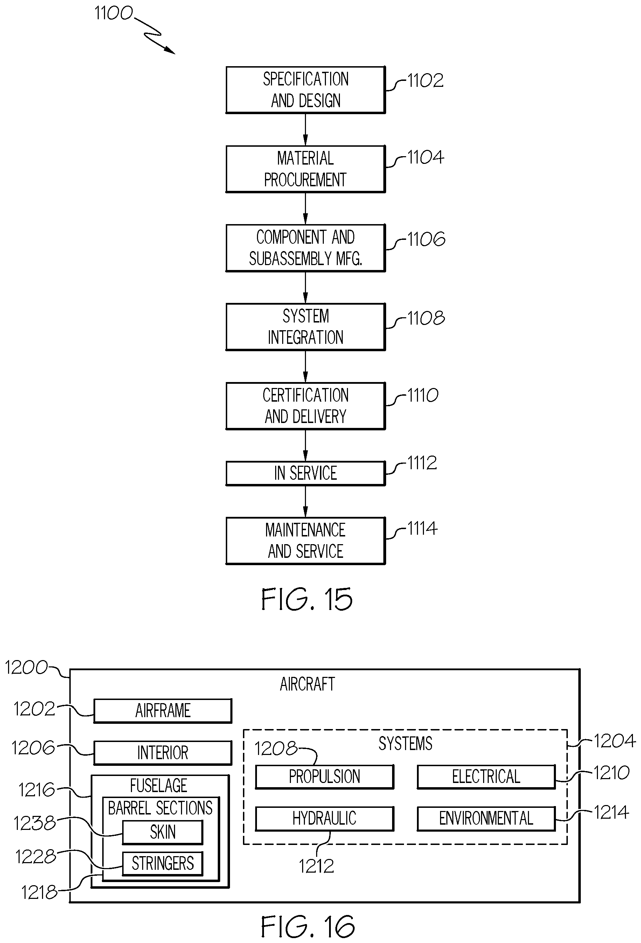

In an aerospace example, the structures 176 are barrel sections 1218 (e.g., a first-barrel section 1220 and a second-barrel section 1222) of a fuselage 1216 of an aircraft 1200 (Fig. 16). In one or more examples, each of the barrel sections 1218 is a full-size (e.g., cylindrical) barrel section that includes a skin 1238 and stringers 1228 (Fig. 16).

In one or more examples, the structures 176 are supported, positioned, and shaped using fixtures 194 that correspond to the structures 176. In the illustrated example, a first fixture 202 supports, positions, and shapes the first structure 106 (e.g., the first-barrel section 1220). A second fixture 204 supports, positions, and shapes the second structure 108 (e.g., the second-barrel section 1222).

Referring briefly to Figs. 1, 2 and 13, in one or more examples, the fixture 194 includes a cradle 196. The cradle 196 supports the structure 176 (e.g., barrel section 1218). As an example, the cradle 196 can support the structure 176 longitudinally and circumferentially. In one or more examples, the fixture 194 includes a plurality of actuators 198. The actuators 198 are coupled to the cradle 196 and are selectively actuated to control the shape of the structure 176. As an example, the actuators 198 of the first fixture 202 shape the first structure 106 into a first-assembly shape 154 and the actuators 198 of the second fixture 204 shape the second structure 108 into a second-assembly shape 156.

In other examples, each one of the fixtures 194 can include various other functional components. As an example, each one of the fixtures 194 includes wheels or similar movable platform that is coupled to the cradle 196 for moving the structure 176 in a manufacturing environment 200. As another example, each one of the fixtures 194 includes a controller that instructs operation of the actuators 198. As another example, each one of the fixtures 194 includes an alignment device (e.g., laser or vision alignment device) that aides in positioning the fixtures 194 in the pre-assembly position 142 (Fig. 1) and the assembly position 144 (Fig. 2).

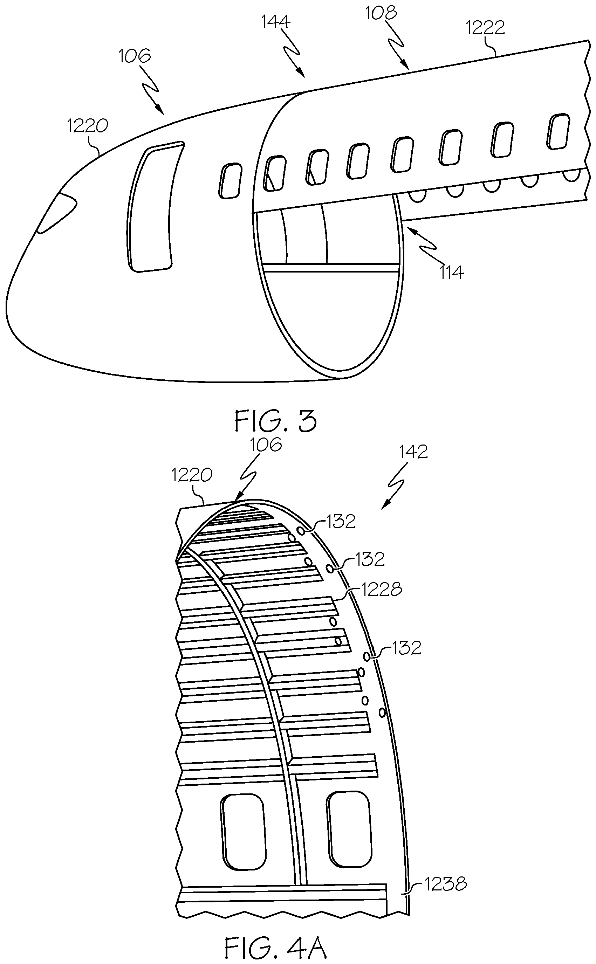

Fig. 3 schematically illustrates an example of a portion of the first structure 106 (e.g., first-barrel section 1220) and the second structure 108 (e.g., second-barrel section 1222) in the assembly position 144. In the example illustrated in Fig. 3, the fixtures 194 are not shown for clarity of illustration. In the assembly position 144, the first structure 106 and the second structure 108 are aligned with each other such that opposing ends of each of the first structure 106 and the second structure 108 are abutted to form a joint 114.

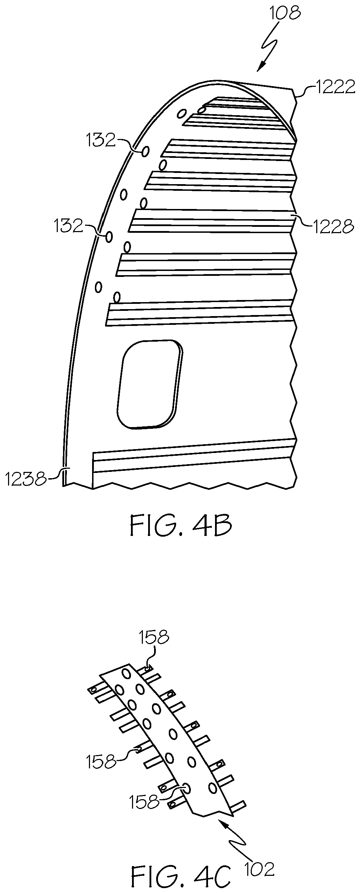

Figs. 4A, 4B and 4C, also herein referred to in combination as Fig. 4, schematically illustrate an example of a portion of the first structure 106 (e.g., first-barrel section 1220) in the pre-assembly position 142 (e.g., Fig. 1), an example of a portion of the second structure 108 (e.g., second-barrel section 1222) in the pre-assembly position 142 (e.g., Fig. 1), and an example of a splice 102 used to join the first structure 106 and the second structure 108 along the joint 114 when positioned in the assembly position 144 (Figs. 2 and 3). In the example illustrated in Figs. 4A and 4B, the fixtures 194 are not shown for clarity of illustration. In the pre-assembly position 142, the first structure 106 and the second structure 108 are shaped and aligned with each other for measurement of the first structure 106 and the second structure 108.

In one or more examples, a first plurality of the structure-verification holes 132 are drilled through the first structure 106. A second plurality of the structure-verification holes 132 are drilled through the second structure 108. In one or more examples, the structure-verification holes 132 are drilled in the first structure 106 and the second structure 108 before being positioned and shaped. In one or more examples, the structure-verification holes 132 are drilled in the first structure 106 and the second structure 108 after being positioned and shaped.

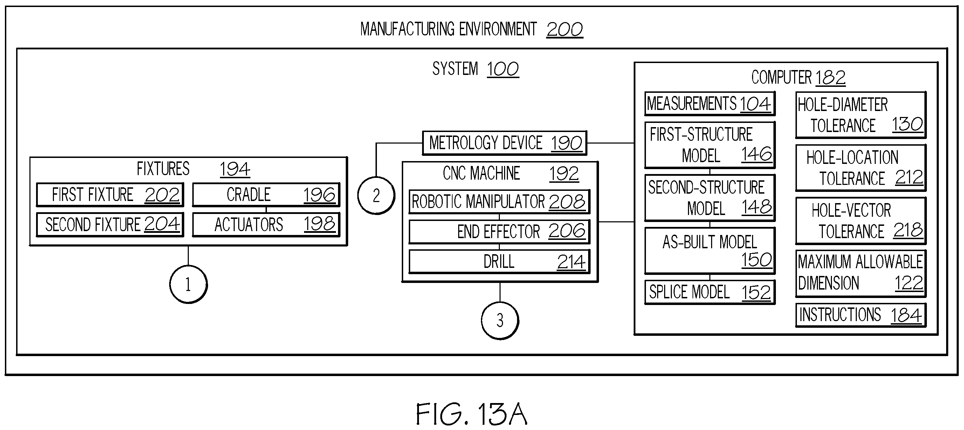

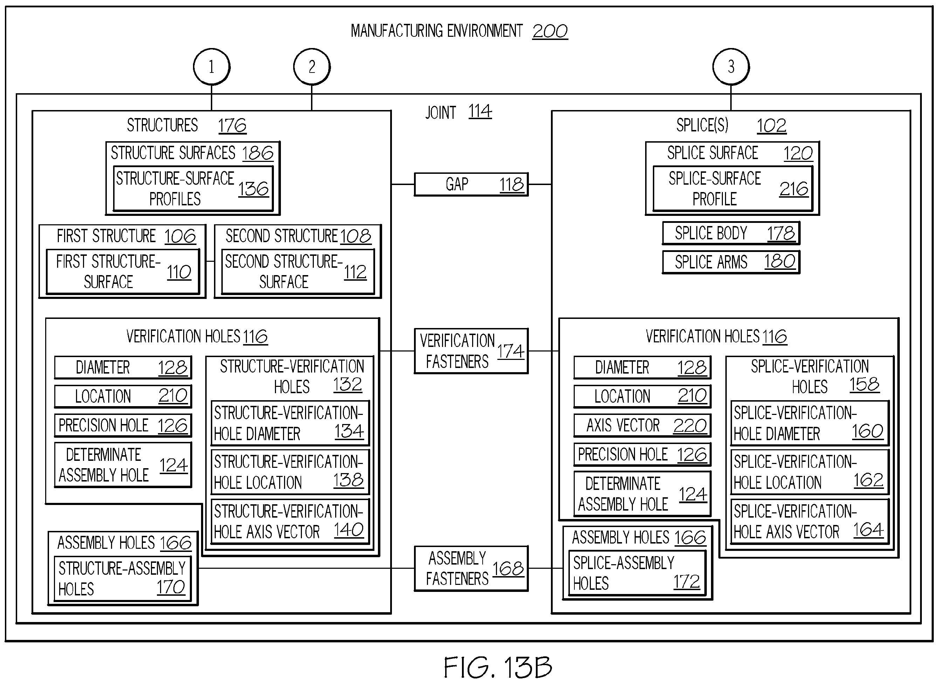

In one or more examples, the structure-verification holes 132 are precision-drilled holes, such as full-size determinant assembly holes. As such, at least one of the location 210, the diameter 128, and the axis vector 220 (Figs. 13A and 13B) of each one of the structure-verification holes 132 is precisely controlled during the drilling operation to be within a predetermined tolerance.

In the aerospace example, the first plurality of the structure-verification holes 132 is drilled through the skin 1238 and the stringers 1228 of the first-barrel section 1220. The second plurality of the structure-verification holes 132 is drilled through the skin 1238 and the stringers 1228 of the second-barrel section 1222. The stringers 1228 can have any one of various shapes or configurations, such as hat-shaped, L-shaped, Z-shaped, and the like. Generally, regardless of the cross-sectional shape of the stringer, the structure-verification holes 132 are drilled through a flange portion of the stringer that is mated to the surface of the skin.

Referring to Figs. 4A, 4B, 4C, 13A and 13B, in one or more examples, the structure surfaces 186 of the structures 176 are measured. As an example, the first-structure surface 110 of the first structure 106 is measured and the second-structure surface 112 of the second structure 108 is measured. In one or more examples, measurements 104 (Figs. 13A and 13B) of the structure surfaces 186 are generated by scanning the structure surfaces 186 with a metrology device 190, such as a laser scanner, a structured light scanner, a LiDAR scanner, or the like.

The measurements 104 of the structure surfaces 186 represent the structure-surface profiles 136 of the structure surfaces 186. The measurements 104 of the structure surfaces 186 also represent one or more of the structure-verification-hole diameters 134 of the structure-verification holes 132, the structure-verification-hole locations 138 of the structure-verification holes 132, and the structure-verification-hole axis vectors 140 of the structure-verification holes 132.

In one or more examples, a plurality of the splices 102 are machined based on the measurements 104 of the structure surfaces 186. In one or more examples, each one of the splices 102 extends along a portion of the circumference of the joint 114. Accordingly, with all of the splices 102 installed along the joint 114, the splices 102 form a full-circumference splice.

Referring to Figs. 13A and 13B, also herein referred to in combination as Fig. 13, in one or more examples, the measurements 104 of the first-structure surface 110 of the first structure 106 are used by a computer 182 to generate a first-structure model 146. The measurements 104 of the second-structure surface 112 of the second structure 108 are used by the computer 182 to generate a second-structure model 148. The computer 182 is programmed to transform the first-structure model 146 and the second-structure model 148 into an as-built model 150 that represents the assembly position 144, thereby virtually indexing the first structure 106 and the second structure 108 in their corresponding assembly-shapes. The computer 182 is programmed to generate a splice model 152 that corresponds to and that is complementary to the as-built model 150.

Referring to Figs. 4A, 4B, 4C, 13A and 13B, each one of the splices 102 is precision machined based on the splice model 152 corresponding to a circumferential section of the joint 114. The splice 102 includes a splice surface 120 that is precision machined to have a splice-surface profile 216 that is complementary to the structure-surface profile 136 of the first-structure surface 110 and the structure-surface profile 136 of the second-structure surface 112. The splice 102 is also precision-machined to have a plurality of splice-verification holes 158. The splice-verification holes 158 correspond to the structure-verification holes 132 in the first structure 106 and the second structure 108.

In one or more examples, the splice-verification holes 158 are precision-drilled holes, such as full-size determinant assembly holes. As such, at least one of the location 210, the diameter 128, and the axis vector 220 (Figs. 13A and 13B) of each one of the splice-verification holes 158 is precisely controlled during the drilling operation to be within a predetermined tolerance. Further, the location 210, the diameter 128, and the axis vector 220 of each one of the splice-verification holes 158 is machined to correspond to the location 210, the diameter 128, and the axis vector 220 of a corresponding one of the structure-verification holes 132 within a predetermined tolerance.

Accordingly, upon precision machining of the structure-verification holes 132 of the structures 176 and precision machining of the splice surface 120 and the splice-verification holes 158 of the splice 102, within the predetermined tolerance based on the measurements of the structure surfaces 186, it can be deemed that, upon installation of the splice 102, any deviations between the structure-surface profiles 136 and the splice-surface profile 216 and, thus, the dimensions of any gaps 118 between the structure surfaces 186 and the splice surface 120 are less than or equal to the dimensional value of the predetermined tolerance. As such, installation the splice 102 using a plurality of verification fasteners 174 installed through aligned pairs of the splice-verification holes 158 and the structure-verification holes 132 self-verifies that any instance of the gap 118 is within a predetermined maximum allowable dimension 122. As a result of this self-verifying splice installation process, use of gap-filling shims, manual measurement, and gap-tolerance verification are no longer required.

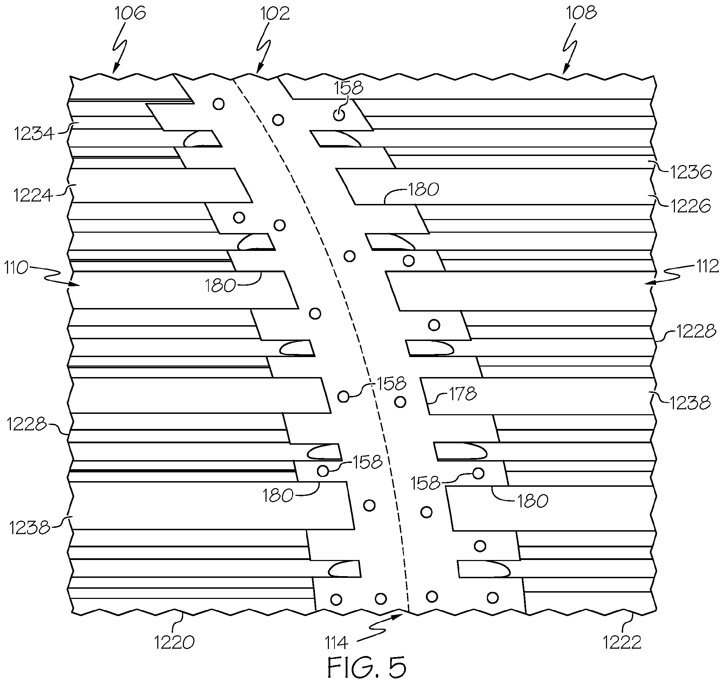

Figs. 5-9 schematically illustrate examples of a portion of the first structure 106, the second structure 108, and the splice 102 that are integrated to form the joint 114.

As illustrated in Fig. 5, in an aerospace example, the first-structure surface 110 includes a first-barrel-section surface 1224 and a first-stringer surface 1234. The first-barrel-section surface 1224 includes an interior surface of the skin 1238 of the first-barrel section 1220 adjacent to, proximate, or along the joint 114. The first-stringer surface 1234 includes a flange surface, such as two opposed flange surfaces of at least one first stringer 1230, coupled to the first-barrel-section surface 1224.

The second-structure surface 112 includes a second-barrel-section surface 1226 and a second-stringer surface 1236. The second-barrel-section surface 1226 includes an interior surface of the skin 1238 of the second-barrel section 1222 adjacent to, proximate, or along the joint 114. The second-stringer surface 1236 includes a flange surface, such as two opposed flange surfaces of at least one second stringer 1232, coupled to the second-barrel-section surface 1226.

The splice 102 is machined such that the splice-surface profile 216 corresponds to or is complementary to a plurality of different instances of the structure-surface profiles 136. As an example, the splice 102 is machined such that the splice-surface profile 216 corresponds to or is complementary to the structure-surface profile 136 of the first-barrel-section surface 1224, the structure-surface profile 136 of the first-stringer surface 1234, the structure-surface profile 136 of the second-barrel-section surface 1226, and the structure-surface profile 136 of the second-stringer surface 1236. Accordingly, the splice 102 is machined such that a portion of the splice surface 120 mates with first-barrel-section surface 1224, a portion of the splice surface 120 mates with first-stringer surface 1234, a portion of the splice surface 120 mates with second-barrel-section surface 1226, and a portion of the splice surface 120 mates with second-stringer surface 1236.

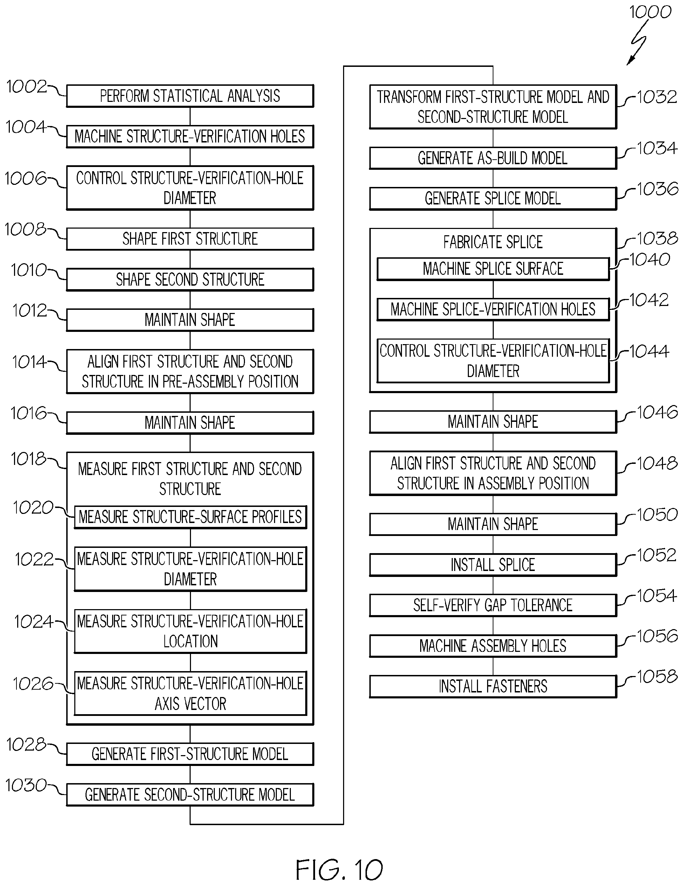

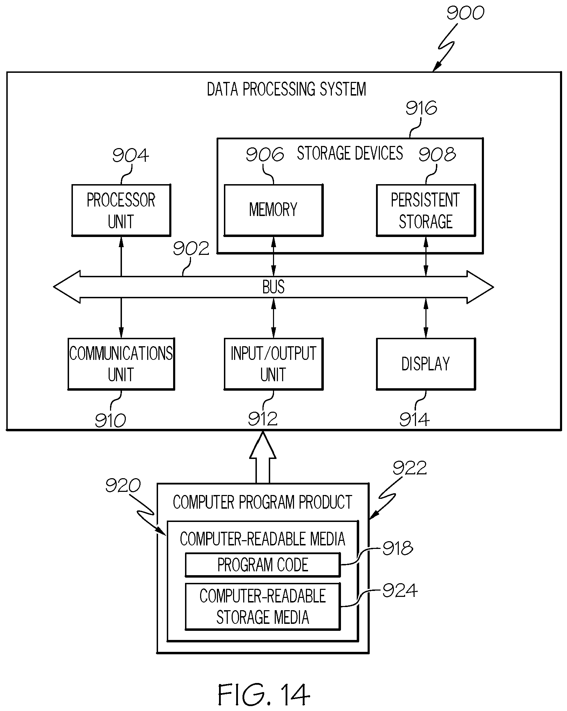

Referring generally to Figs. 1-9, 13A and 13B and particularly to Fig. 10, disclosed are examples of a method 1000 for joining the structures 176. In one or more examples, the method 1000 is implemented using the system 100 (Figs. 13A and 13B) and/or the data processing system 900 (Fig. 14). In one or more examples, one or more operations or steps of the method 1000 are performed using a computer and, as such, in these examples, the method 1000 is a computer-implemented method or process. The following are examples of the method 1000, according to the present disclosure. Not all of the elements, steps, and/or operations described in one example are required in that example. Some or all of the elements, steps, and/or operations described in one example can be combined with other examples in various ways without the need to include other elements, steps, and/or operations described in those other examples, even though such combination or combinations are not explicitly described or illustrated by example herein.

In one or more examples, the method 1000 includes a step of (block 1038) fabricating a splice 102 based on measurements 104 of a first-structure surface 110 of a first structure 106 and a second-structure surface 112 of a second structure 108 along a joint 114 formed between the first structure 106 and the second structure 108.

In one or more examples, the method 1000 includes a step of (block 1052) installing the splice 102 using a plurality of verification holes 116 formed in the first structure 106, the second structure 108, and the splice 102.

In one or more examples, the method 1000 includes a step of (block 1054) self-verifying that the gap 118 between a splice surface 120 of the splice 102 and each one of the first-structure surface 110 and the second-structure surface 112 is less than or equal to a maximum allowable dimension 122 of the gap 118 by installing the splice 102.

Generally, the same processes are used to drill holes and machine the surfaces on the splices 102. As such, the tolerance accumulation is equal for the holes and the surface profile and the maximum gap is equal with a dimension of hole misalignment, which is verified by installing fasteners.

The maximum allowable dimension 122 of the gap 118 between the splice surface 120 and the structure surfaces 186 of the structures 176 refers to a predetermined maximum value for the dimension of the gap 118 that is allowable between the splice surface 120 and the structure surfaces 186. In one or more examples, the maximum allowable dimension 122 accounts for the dimensional tolerance of variations in the structure-surface profiles 136 of the structures 176.

In one or more examples, each one of the verification holes 116 is a determinate assembly hole 124. For the purpose of the present disclosure, determinate assembly ("DA") is a technique used in a manufacturing and assembly environment 200 where the verification holes 116 are used to index the structures 176 relative to each other. In one or more examples, the verification holes 116 are full-size determinate assembly holes. In one or more examples, one or more of the verification holes 116 are precisely positioned and sized for use as fastener locations.

In one or more examples, each one of the verification holes 116 is a precision hole 126. The precision hole 126 has a diameter 128 that is within a predetermined hole-diameter tolerance 130. The precision hole 126 also has a location 210 that is within a predetermined hole-location tolerance 212. The hole-diameter tolerance 130 refers to a predetermined maximum value of the dimensional tolerance relating to the diameter of the drilled hole. The hole-location tolerance 212 refers to a predetermined maximum value of the dimensional tolerance relating to the relative location of the drilled hole. In one or more examples, the predetermined hole-diameter tolerance 130 is less than or equal to the maximum allowable dimension 122 of the gap 118 between the splice surface 120 and each one of the first-structure surface 110 and the second-structure surface 112. In one or more examples, the predetermined hole-location tolerance 212 is less than or equal to the maximum allowable dimension 122 of the gap 118 between the splice surface 120 and each one of the first-structure surface 110 and the second-structure surface 112.

Use of the precision hole 126 having the diameter 128 that is within the predetermined hole-diameter tolerance 130 enables use of the verification holes 116 as the determinate assembly holes 124. Use of the precision hole 126 having the diameter 128 that is within the predetermined hole-diameter tolerance 130 also enables use of the splice 102 as a means for self-verifying that the gap-dimensions between mating or faying surfaces of the splice 102 and the structures 176 are within the maximum allowable dimension 122 of the gap 118. As such, the maximum value for the dimension of the gap 118 for profile tolerance is equal to a maximum variation in the values of the diameters 128 and the locations 210 of the verification holes 116.

In one or more examples, the method 1000 includes a step of (block 1004) machining a plurality of the structure-verification holes 132 in the first structure 106 and in the second structure 108. The structure-verification holes 132 can be machined (e.g., drilled or otherwise formed) in the first structure 106 and in the second structure 108 using any suitable automated machine or manual machine. In one or more examples, the structure-verification holes 132 are automatically drilled in the first structure 106 and in the second structure 108 using the end effector 206 having the drill 214 mounted on the end of the robotic manipulator 208 that operates under computer control.

In one or more examples, each one of the structure-verification holes 132 is the determinate assembly hole 124. In one or more examples, the method 1000 includes a step of (block 1006) controlling the structure-verification-hole diameter 134 of each one of the structure-verification holes 132 to be within the predetermined hole-diameter tolerance 130. The predetermined hole-diameter tolerance 130 is less than or equal to the maximum allowable dimension 122 of the gap 118 between the splice surface 120 and each one of the first-structure surface 110 and the second-structure surface 112. Controlling the structure-verification-hole diameters 134 of the structure-verification holes 132 ensures that the maximum variation in the values of the structure-verification-hole diameters 134 is less than or equal to the maximum allowable value for the dimension of the gap 118.

In one or more examples, the method 1000 includes a step of controlling the structure-verification-hole location 138 of each one of the structure-verification holes 132 to be within the predetermined hole-location tolerance 212. The predetermined hole-location tolerance 212 is less than or equal to the maximum allowable dimension 122 of the gap 118 between the splice surface 120 and each one of the first-structure surface 110 and the second-structure surface 112. Controlling the structure-verification-hole locations 138 of the structure-verification holes 132 ensures that the maximum variation in the values of the structure-verification-hole locations 138 is less than or equal to the maximum allowable value for the dimension of the gap 118.

In one or more examples, the method 1000 includes a step of (block 1018) measuring the first-structure surface 110 and the second-structure surface 112 along the joint 114. In one or more examples, the measurements 104 of the first-structure surface 110 and the second-structure surface 112 are taken or otherwise generated using the metrology device 190 that operates under computer control.

In one or more examples, the step of (block 1018) measuring the first-structure surface 110 and the second-structure surface 112 includes a step of (block 1020) measuring structure-surface profiles 136 of the first-structure surface 110 and the second-structure surface 112.

In one or more examples, the step of (block 1018) measuring the first-structure surface 110 and the second-structure surface 112 includes a step of (block 1022) measuring the structure-verification-hole diameters 134 of the structure-verification holes 132.

In one or more examples, the step of (block 1018) measuring the first-structure surface 110 and the second-structure surface 112 includes a step of (block 1024) measuring the structure-verification-hole locations 138 of the structure-verification holes 132.

In one or more examples, the step of (block 1018) measuring the first-structure surface 110 and the second-structure surface 112 includes a step of (block 1026) measuring the structure-verification-hole axis vectors 140 of the structure-verification holes 132.

In one or more examples, the method 1000 includes a step of (block 1014) aligning the first structure 106 and the second structure 108 in the pre-assembly position 142 (e.g., Fig. 1) before measuring the first-structure surface 110 and the second-structure surface 112 along the joint 114 (e.g., block 1018).

In one or more examples, the method 1000 includes a step of (block 1048) aligning the first structure 106 and the second structure 108 in the assembly position 144 (e.g., Fig. 2) before installing the splice 102 (e.g., block 1052).

In one or more examples, the method 1000 includes a step of (block 1028) generating the first-structure model 146. The first-structure model 146 is a virtual, three-dimensional representation of at least a portion of the first structure 106, including, the first-structure surface 110 and the structure-verification holes 132 formed through the first structure 106. The first-structure model 146 includes, represents, or enables determination of the structure-surface profile 136 of the first-structure surface 110, the structure-verification-hole diameters 134 of the structure-verification holes 132 in the first structure 106, the structure-verification-hole locations 138 of the structure-verification holes 132 in the first structure 106, and the structure-verification-hole axis vectors 140 of the structure-verification holes 132 in the first structure 106.

In one or more examples, the method 1000 includes a step of (block 1030) generating the second-structure model 148. The second-structure model 148 is a virtual, three-dimensional representation of at least a portion of the second structure 108, including, the second-structure surface 112 and the structure-verification holes 132 formed through the second structure 108. The second-structure model 148 includes, represents, or enables determination of the structure-surface profile 136 of the second-structure surface 112, the structure-verification-hole diameters 134 of the structure-verification holes 132 in the second structure 108, the structure-verification-hole locations 138 of the structure-verification holes 132 in the second structure 108, and the structure-verification-hole axis vectors 140 of the structure-verification holes 132 in the second structure 108.

In one or more examples, the method 1000 includes a step of (block 1032) transforming the first-structure model 146 and the second-structure model 148. Transforming the first-structure model 146 and the second-structure model 148 can be performed using any suitable computer-implemented image, data, or point cloud transformation techniques and/or algorithms. Transforming the first-structure model 146 and the second-structure model 148 includes translating and/or rotating one or both of the first-structure model 146 and the second-structure model 148 relative to each other.

In one or more examples, the method 1000 includes a step of (block 1034) generating the as-built model 150 that represents the first-structure model 146 and the second-structure model 148 in the assembly position 144. The as-built model 150 is the result of the transforming step (e.g., block 1032).

In one or more examples, the method 1000 includes a step of (block 1036) generating the splice model 152 using the as-built model 150. The splice 102 is fabricated using the splice model 152. The splice model 152 is a virtual, three-dimensional representation of the splice 102, including, the splice surface 120 and the splice-verification holes 158 formed through the splice 102. The splice model 152 includes or represents the splice-surface profile 216 of the splice surface 120, the splice-verification-hole diameters 160 of the splice-verification holes 158 in the splice 102, the splice-verification-hole locations 162 of the splice-verification holes 158 in the splice 102, and the splice-verification-hole axis vectors 164 of the splice-verification holes 158 in the splice 102.

In one or more examples, the method 1000 includes a step of (block 1008) shaping the first structure 106 in the first-assembly shape 154. The method 1000 includes a step of (block 1010) shaping the second structure 108 in the second-assembly shape 156. The method 1000 includes a step of (block 1012) maintaining the first-assembly shape 156 and the second-assembly shape 156 while aligning the first structure 106 and the second structure 108 in the pre-assembly position 142 (e.g., block 1014). The method 1000 includes a step of (block 1016) maintaining the first-assembly shape 154 and the second-assembly shape 156 while measuring the first-structure surface 110 and the second-structure surface 112 (e.g., block 1018). In one or more examples, the method 1000 includes a step of (block 1046) maintaining the first-assembly shape 156 and the second-assembly shape 156 while aligning the first structure 106 and the second structure 108 in the assembly position 144 (e.g., block 1048). In one or more examples, the method 1000 includes a step of (block 1050) maintaining the first-assembly shape 154 and the second-assembly shape 156 while installing the splice 102 (block 1052). The shape-maintaining steps (e.g., blocks 1012, 1016, 1046, and/or 1050) ensure that the first structure 106 and the second structure 108 are in the same shape throughout the alignment, measurement, and installation operations of the method 1000.

In one or more examples, the step of (block 1038) fabricating the splice 102 includes a step of (block 1040) machining the splice surface 120 such that the splice-surface profile 216 is complementary to the structure-surface profiles 136 of the first structure 106 and the second structure 108.

In one or more examples, the step of (block 1038) fabricating the splice 102 includes a step of (block 1042) machining a plurality of the splice-verification holes 158 in the splice 102. The splice-verification holes 158 in the splice 102 are machine in the splice 102 such that the splice-verification holes 158 have the splice-verification-hole diameters 160 that are equal to the structure-verification-hole diameters 134 of the structure-verification holes 132. The splice-verification holes 158 in the splice 102 are machine in the splice 102 such that the splice-verification holes 158 have the splice-verification-hole locations 162 that correspond to the structure-verification-hole locations 138 of the structure-verification holes 132. The splice-verification holes 158 in the splice 102 are machine in the splice 102 such that the splice-verification holes 158 have the splice-verification-hole axis vectors 164 that are equal to the structure-verification-hole axis vectors 140 of the structure-verification holes 132.

In one or more examples, each of the splice-verification holes 158 is the determinate assembly hole 124. In one or more examples, the method 1000 includes a step of (block 1044) controlling the splice-verification-hole diameter 160 of each one of the splice-verification holes 158 to be within the predetermined hole-diameter tolerance 130. The predetermined hole-diameter tolerance 130 is less than or equal to the maximum allowable dimension 122 of the gap 118 between the splice surface 120 and each one of the first-structure surface 110 and the second-structure surface 112. Controlling the splice-verification-hole diameters 160 of the splice-verification holes 158 ensures that the maximum variation in the values of the splice-verification-hole diameters 160 is less than or equal to the maximum allowable value for the dimension of the gap 118.

In one or more examples, the method 1000 includes a step of controlling the splice-verification-hole location 162 of each one of the splice-verification holes 158 to be within the predetermined hole-location tolerance 212. The predetermined hole-location tolerance 212 is less than or equal to the maximum allowable dimension 122 of the gap 118 between the splice surface 120 and each one of the first-structure surface 110 and the second-structure surface 112. Controlling the splice-verification-hole locations 162 of the splice-verification holes 158 ensures that the maximum variation in the values of the splice-verification-hole locations 162 is less than or equal to the maximum allowable value for the dimension of the gap 118.

In one or more examples, the step of (block 1052) installing the splice 102 incudes installing the verification fasteners 174 in the verification holes 116. In one or more examples, one or more of the verification fasteners 174 is an index pin. In one or more examples, one or more of the verification fasteners 174 is a mechanical fastener, such as a nut and bolt, a rivet, and the like.

In one or more examples, the method 1000 includes a step of (block 1056) machine a plurality of the assembly holes 166 in the first structure 106, in the second structure 108, and in the splice 102. In an example, the assembly holes 166 can be machined (e.g., drilled or otherwise formed) in the first structure 106 and in the splice 102 and in the second structure 108 and in splice 102 using any suitable automated machine or manual machine. In one or more examples, the assembly holes 166 are automatically drilled through the first structure 106 and the splice 102 and through the second structure 108 and the splice 102 using the end effector 206 having the drill 214 mounted on the end of the robotic manipulator 208 that operates under computer control.

Referring briefly to Fig. 13B, in one or more examples, the assembly holes 166 are formed in the structures 176 and may be referred to as structure-assembly holes 170. In one or more examples, the assembly holes 166 are formed in the splices 102 and may be referred to as splice-assembly holes 172.

Referring again to Fig. 10, the method 1000 includes a step of (block 1058) installing assembly fasteners 168 in the assembly holes 166. In one or more examples, the assembly fasteners 168 include a mechanical fastener, such as a nut and bolt, a rivet, and the like. In one or more examples, the assembly fasteners 168 are manually installed through the assembly holes 166. In one or more examples, the assembly fasteners 168 are automatically installed through the assembly holes 166, for example, using the end effector 206 mounted on the end of the robotic manipulator 208 that operates under computer control.

In one or more examples, the method 1000 includes a step of (block 1002) determining the ratio of the verification holes 116 to the assembly holes 166 using a statistical analysis. As an example, the ratio of the verification holes 116 to the assembly holes 166 is 1:10 (e.g., approximately 10 %). As an example, the ratio of the verification holes 116 to the assembly holes 166 is 3:20 (e.g., approximately 15 %). As an example, the ratio of the verification holes 116 to the assembly holes 166 is 1:5 (e.g., approximately 20 %). As an example, the ratio of the verification holes 116 to the assembly holes 166 is 1:4 (e.g., approximately 25 %). However, other ratios can be used, based on the statistical analysis.

Referring to Figs. 1-9 and 13, in one or more examples, the first structure 106 includes or takes the form of the first-barrel section 1220 of the fuselage 1216 of the aircraft 1200. The second structure 108 includes or takes the form of the second-barrel section 1222 of the fuselage 1216. In one or more examples, the first-structure surface 110 includes the first-barrel-section surface 1224 of the first-barrel section 1220. The second-structure surface 112 includes the second-barrel-section surface 1226 of the second-barrel section 1222. In one or more examples, the first-structure surface 110 also includes the first-stringer surface 1234 of the first stringer 1230 that is coupled to the first-barrel section 1220. The second-structure surface 112 also includes the second-stringer surface 1236 of the second stringer 1232 that is coupled to the second-barrel section 1222.

Referring to Figs. 4A-8, 13A and 13B, in one or more examples, the splice 102, fabricated according to the method 1000, includes the splice body 178. The splice 102 includes a plurality of the splice arms 180 that extend from the splice body 178. The splice 102 includes a plurality of the splice-verification holes 158. At least some of the of the splice-verification holes 158 are formed through the splice body 178. At least some of the splice-verification holes 158 are formed through one or more of the splice arms 180.

Referring to Figs. 1, 2 and 16, in one or more examples, at least a portion of the fuselage 1216 of the aircraft 1200 is assembled according to the method 1000.

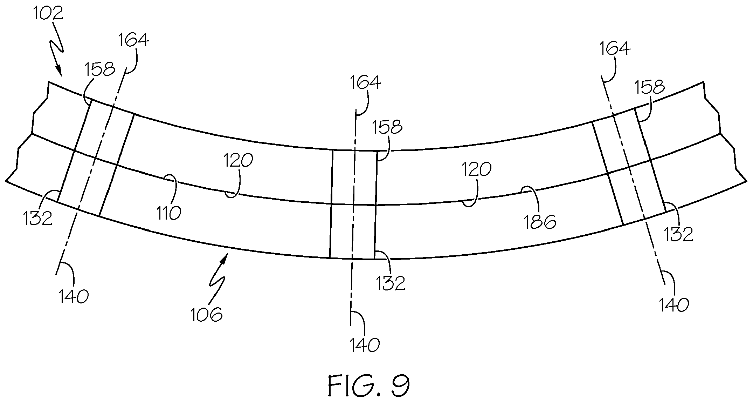

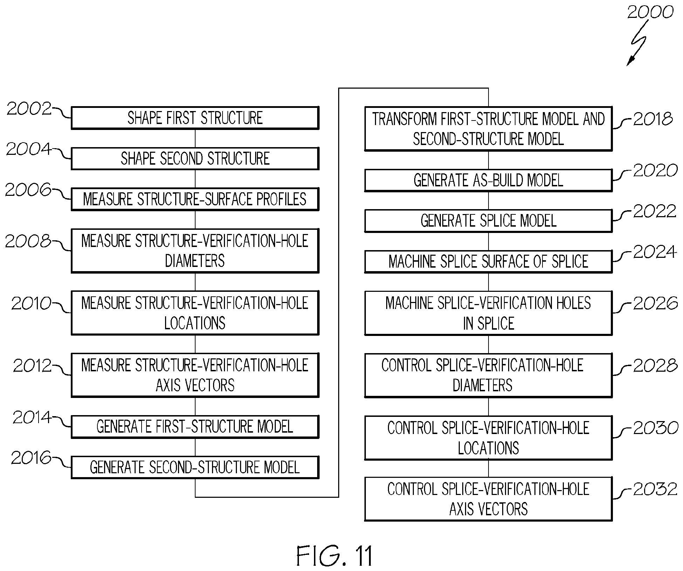

Referring generally to Figs. 1-9 and 13 and particularly to Fig. 11, disclosed are examples of a method 2000 for manufacturing the splice 102 that is used to join the structures 176. In one or more examples, the method 2000 forms a portion of the method 1000 (Fig. 9). For example, one or more of the elements, operations, or steps of the method 2000 correspond to one or more the elements, operations, or steps of the method 1000.

In one or more examples, the method 2000 is implemented using the system 100 (Figs. 13A and 13B) and/or the data processing system 900 (Fig. 14). In one or more examples, one or more operations or steps of the method 2000 are performed using a computer and, as such, in these examples, the method 2000 is a computer-implemented method or process. The following are examples of the method 2000, according to the present disclosure. Not all of the elements, steps, and/or operations described in one example are required in that example. Some or all of the elements, steps, and/or operations described in one example can be combined with other examples in various ways without the need to include other elements, steps, and/or operations described in those other examples, even though such combination or combinations are not explicitly described or illustrated by example herein.

In one or more examples, the method 2000 includes a step of (block 2006) measuring the structure-surface profiles 136 of the first-structure surface 110 of the first structure 106 and the second-structure surface 112 of the second structure 108.

In one or more examples, the method 2000 includes a step of (block 2008) measuring the structure-verification-hole diameters 134 of the structure-verification holes 132 in the first structure 106 and the second structure 108.

In one or more examples, the method 2000 includes a step of (block 2010) measuring the structure-verification-hole locations 138 of the structure-verification holes 132.

In one or more examples, the method 2000 includes a step of (block 2012) measuring the structure-verification-hole axis vectors 140 of the structure-verification holes 132.

In one or more examples, the method 2000 includes a step of (block 2024) machining the splice surface 120 of the splice 102 such that the splice-surface profile 216 is complementary to the structure-surface profiles 136 of the first-structure surface 110 and the second-structure surface 112.

In one or more examples, the method 2000 includes a step of (block 2026) machining a plurality of the splice-verification holes 158 in the splice 102. The splice-verification holes 158 are machined such that the splice-verification-hole diameters 160 are equal to the structure-verification-hole diameters 134 of the structure-verification holes 132. The splice-verification holes 158 are machined such that the splice-verification-hole locations 162 correspond to the structure-verification-hole locations 138 of the structure-verification holes 132. The splice-verification holes 158 are machined such that the splice-verification-hole axis vectors 164 are equal to the structure-verification-hole axis vectors 140 of the structure-verification holes 132.

In one or more examples, the method 2000 includes a step of (block 2028) controlling the splice-verification-hole diameters 160 of the splice-verification holes 158 to be within the predetermined hole-diameter tolerance 130. The predetermined hole-diameter tolerance 130 is less than or equal to the maximum allowable dimension 122 of the gap 118 between the splice surface 120 and each one of the first-structure surface 110 and the second-structure surface 112.

In one or more examples, the method 2000 includes a step of (block 2030) controlling the splice-verification-hole locations 162 of the splice-verification holes 158 to be within the predetermined hole-location tolerance 212. The predetermined hole-location tolerance 212 is less than or equal to the maximum allowable dimension 122 of the gap 118 between the splice surface 120 and each one of the first-structure surface 110 and the second-structure surface 112.

In one or more examples, the method 2000 includes a step of (block 2032) controlling the splice-verification-hole axis vectors 164 of the splice-verification holes 158 to be within the predetermined hole-vector tolerance 218. The predetermined hole-vector tolerance 218 is less than or equal to the maximum allowable dimension 122 of the gap 118 between the splice surface 120 and each one of the first-structure surface 110 and the second-structure surface 112.

In one or more examples, the method 2000 includes a step of (block 2014) generating the first-structure model 146. The method 2000 includes a step of (block 2016) generating the second-structure model 148. The method 2000 includes a step of (block 2018) transforming the first-structure model 146 and the second-structure model 148. The method 2000 includes a step of (block 2020) generating the as-built model 150 that represents the first-structure model 146 and the second-structure model 148 in the assembly position 144 (Fig. 2). The method 2000 includes a step of (block 2022) generating the splice model 152 using the as-built model 150. The splice 102 is machined using or based on the splice model 152.

In one or more examples, the method 2000 includes a step of (block 2002) shaping the first structure 106 in the first-assembly shape 154. The method 2000 includes a step of (block 2004) shaping the second structure 108 in the second-assembly shape 156. The method 2000 includes a step of maintaining the first-assembly shape 154 and the second-assembly shape 156 while measuring the first-structure surface 110 and the second-structure surface 112 (e.g., blocks 2010 and 2012).

Referring to Figs. 4A-9, 13A and 13B, in one or more examples, the splice 102 is manufactured according to the method 2000. In one or more examples, the splice 102 includes the splice body 178. The splice 102 includes a plurality of the splice arms 180 that extend from the splice body 178. The splice 102 includes a plurality of the splice-verification holes 158 that are formed through the splice body 178 and one or more of the splice arms 180.

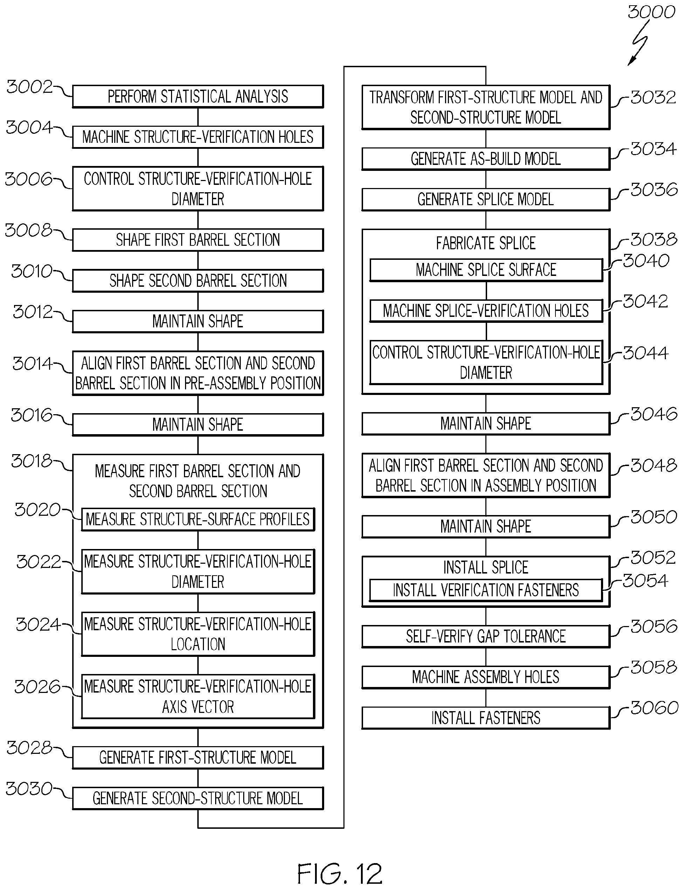

Referring generally to Figs. 1-9 and 13 and particularly to Fig. 12, disclosed are examples of a method 3000 for joining the barrel sections 1218 of the fuselage 1216 of the aircraft 1200. In one or more examples, the method 3000 is implemented using the system 100 (Figs. 13A and 13B) and/or the data processing system 900 (Fig. 14). In one or more examples, one or more operations or steps of the method 3000 are performed using a computer and, as such, in these examples, the method 3000 is a computer-implemented method or process. The following are examples of the method 3000, according to the present disclosure. Not all of the elements, steps, and/or operations described in one example are required in that example. Some or all of the elements, steps, and/or operations described in one example can be combined with other examples in various ways without the need to include other elements, steps, and/or operations described in those other examples, even though such combination or combinations are not explicitly described or illustrated by example herein.

In one or more examples, the method 3000 includes a step of (block 3038) fabricating the splice 102 based on the measurements 104 of the first-barrel-section surface 1224 of the first-barrel section 1220 and the second-barrel-section surface 1226 of the second-barrel section 1222 along the joint 114 formed between the first-barrel section 1220 and the second-barrel section 1222.

In one or more examples, the method 3000 includes a step of (block 3052) installing the splice 102 using a plurality of the verification holes 116 formed in the first-barrel section 1220, in the second-barrel section 1222, and in the splice 102.

In one or more examples, the method 3000 includes a step of (block 3056) self-verifying that the gap 118 between the splice surface 120 of the splice 102 and each one of the first-barrel-section surface 1224 and the second-barrel-section surface 1226 is less than or equal to a maximum allowable dimension 122 of the gap 118 by installing the splice 102.

In one or more examples, the step of (block 3038) fabricating the splice 102 is based on measurements 104 of the first-stringer surface 1234 of the first stringer 1230 that is coupled to the first-barrel-section surface 1224 and of the second-stringer surface 1236 of the second stringer 1232 that is coupled to the second-barrel-section surface 1226. In these examples, the step of (block 3056) self-verifying that the gap 118 includes self-verifying that the gap 118 between the splice surface 120 of the splice 102 and each one of the first-stringer surface 1234 and the second-stringer surface 1236 is less than or equal to the maximum allowable dimension 122 of the gap 118 by installing the splice 102.

In one or more examples, the step of (block 3052) installing the splice 102 includes a step of (block 3054) installing a plurality of the verification fasteners 174 in the verification holes 116.

In one or more examples, the method 3000 includes a step of (block 3058) machining a plurality of the assembly holes 166. In one or more examples, the assembly holes 166 are machined in the first-barrel section 1220, in the second-barrel section 1222, and in the splice 102. The method 3000 includes a step of (block 3060) installing a plurality of the assembly fasteners 168 in the assembly holes 166.

In one or more examples, the assembly holes 166 are machined in the first stringer 1230, in the second stringer 1232, and in the splice 102. A plurality of the assembly fasteners 168 are installed in the assembly holes 166.

In one or more examples, the method 3000 includes a step of (block 3002) performing the statistical analysis to determine the ratio of the verification holes 116 to the assembly holes 166. As an example, the ratio of the verification holes 116 to the assembly holes 166 is 1:10 (e.g., approximately 10 %). As an example, the ratio of the verification holes 116 to the assembly holes 166 is 3:20 (e.g., approximately 15 %). As an example, the ratio of the verification holes 116 to the assembly holes 166 is 1:5 (e.g., approximately 20 %). As an example, the ratio of the verification holes 116 to the assembly holes 166 is 1:4 (e.g., approximately 25 %). However, other ratios can be used, based on the statistical analysis.

In one or more examples, the method 3000 includes a step of (block 3014) aligning the first-barrel section 1220 and the second-barrel section 1222 in the pre-assembly position 142 (Fig. 1) before measuring the first-barrel-section surface 1224 and the second-barrel-section surface 1226 (e.g., block 3018). The method 3000 includes a step of (block 3048) aligning the first-barrel section 1220 and the second-barrel section 1222 in the assembly position 144 before installing the splice 102 (e.g., block 3052).

In one or more examples, the method 3000 includes a step of (block 3028) generating the first-structure model 146. The first-structure model 146 is a virtual, three-dimensional representation of at least a portion of the first-barrel section 1220, including, the first-barrel-section surface 1224 and the structure-verification holes 132 formed through the first-barrel section 1220. The first-structure model 146 includes, represents, or enables determination of the structure-surface profile 136 of the first-barrel-section surface 1224, the structure-verification-hole diameters 134 of the structure-verification holes 132 in the first-barrel section 1220, the structure-verification-hole locations 138 of the structure-verification holes 132 in the first-barrel section 1220, and the structure-verification-hole axis vectors 140 of the structure-verification holes 132 in the first-barrel section 1220.

In one or more examples, the method 3000 includes a step of (block 3030) generating the second-structure model 148. The second-structure model 148 is a virtual, three-dimensional representation of at least a portion of the second-barrel section 1222, including, the second-barrel-section surface 1226 and the structure-verification holes 132 formed through the second-barrel section 1222. The second-structure model 148 includes, represents, or enables determination of the structure-surface profile 136 of the second-barrel-section surface 1226, the structure-verification-hole diameters 134 of the structure-verification holes 132 in the second-barrel section 1222, the structure-verification-hole locations 138 of the structure-verification holes 132 in the second-barrel section 1222, and the structure-verification-hole axis vectors 140 of the structure-verification holes 132 in the second-barrel section 1222.

In one or more examples, the method 3000 includes a step of (block 3032) transforming the first-structure model 146 and the second-structure model 148. Transforming the first-structure model 146 and the second-structure model 148 can be performed using any suitable computer-implemented image, data, or point cloud transformation techniques and/or algorithms. Transforming the first-structure model 146 and the second-structure model 148 includes translating and/or rotating one or both of the first-structure model 146 and the second-structure model 148 relative to each other.

In one or more examples, the method 3000 includes a step of (block 3034) generating the as-built model 150 that represents the first-structure model 146 and the second-structure model 148 in the assembly position 144. The as-built model 150 is the result of the transforming step (e.g., block 3032).

In one or more examples, the method 3000 includes a step of (block 3036) generating the splice model 152 using the as-built model 150. The splice 102 is fabricated using the splice model 152. The splice model 152 is a virtual, three-dimensional representation of the splice 102, including, the splice surface 120 and the splice-verification holes 158 formed through the splice 102. The splice model 152 includes or represents the splice-surface profile 216 of the splice surface 120, the splice-verification-hole diameters 160 of the splice-verification holes 158 in the splice 102, the splice-verification-hole locations 162 of the splice-verification holes 158 in the splice 102, and the splice-verification-hole axis vectors 164 of the splice-verification holes 158 in the splice 102.

In one or more examples, the method 3000 includes a step of (block 3008) shaping the first-barrel section 1220 in the first-assembly shape 154. The method 3000 includes a step of (block 3010) shaping the second-barrel section 1222 in the second-assembly shape 156. The method 3000 includes a step of (block 3012) maintaining the first-assembly shape 156 and the second-assembly shape 156 while aligning the first-barrel section 1220 and the second-barrel section 1222 in the pre-assembly position 142 (e.g., block 3014). The method 3000 includes a step of (block 3016) maintaining the first-assembly shape 154 and the second-assembly shape 156 while measuring the first-barrel-section surface 1224 and the second-barrel-section surface 1224 (e.g., block 3018). The method 3000 includes a step of (block 3046) maintaining the first-assembly shape 156 and the second-assembly shape 156 while aligning the first-barrel section 1220 and the second-barrel section 1222 in the assembly position 144 (e.g., block 3048). The method 3000 includes a step of (block 3050) maintaining the first-assembly shape 154 and the second-assembly shape 156 while installing the splice 102 (e.g., block 3052).

In one or more examples, the method 3000 includes a step of (block 3004) machining a plurality of the structure-verification holes 132 in the first-barrel section 1220 and in the second-barrel section 1222. The method 3000 includes a step of (block 3018) measuring the first-barrel-section surface 1224 and the second-barrel-section surface 1226 along the joint 114.

In one or more examples, the method 3000 includes a step of (block 3006) controlling the structure-verification-hole diameter 134 of each one of the structure-verification holes 132 to be within the predetermined hole-diameter tolerance 130. In one or more examples, the method 3000 includes a step of controlling the structure-verification-hole location 138 of each one of the structure-verification holes 132 to be within the predetermined hole-location tolerance 212.

In one or more examples, the step of (block 3018) measuring the first-barrel-section surface 1224 and the second-barrel-section surface 1226 includes a step of (block 3020) measuring the structure-surface profiles 136 of the first-barrel-section surface 1224 and the second-barrel-section surface 1226. The step of (block 3018) measuring the first-barrel-section surface 1224 and the second-barrel-section surface 1226 includes a step of (block 3022) measuring structure-verification-hole diameters 134 of the structure-verification holes 132 in the first-barrel section 1220 and the second-barrel section 1222. The step of (block 3018) measuring the first-barrel-section surface 1224 and the second-barrel-section surface 1226 includes a step of (block 3024) measuring the structure-verification-hole locations 138 of the structure-verification holes 132 in the first-barrel section 1220 and the second-barrel section 1222. The step of (block 3018) measuring the first-barrel-section surface 1224 and the second-barrel-section surface 1226 includes a step of (block 3026) measuring the structure-verification-hole axis vectors 140 of the structure-verification holes 132 in the first-barrel section 1220 and the second-barrel section 1222.

In one or more examples, the step of (block 3038) fabricating the splice 102 includes a step of (block 3040) machining the splice surface 120 to have the splice-surface profile 216 that is complementary to the structure-surface profiles 136 of the first-barrel-section surface 1224 and the second-barrel-section surface 1224. The step of (block 3038) fabricating the splice 102 includes a step of (block 3042) machining a plurality of the splice-verification holes 158 in the splice 102. The splice-verification holes 158 are machined to include the splice-verification-hole diameters 160 that are equal to the structure-verification-hole diameters 134 of the structure-verification holes 132 in the first-barrel section 1220 and the second-barrel section 1222. The splice-verification holes 158 are machined to include the splice-verification-hole locations 162 that correspond to the structure-verification-hole locations 138 of the structure-verification holes 132 in the first-barrel section 1220 and the second-barrel section 1222. The splice-verification holes 158 are machined to include the splice-verification-hole axis vectors 164 that are equal to the structure-verification-hole axis vectors 140 of the structure-verification holes 132 in the first-barrel section 1220 and the second-barrel section 1222.

In one or more examples, each of the splice-verification holes 158 is the determinate assembly hole 124. In one or more examples, the method 3000 includes a step of (block 3044) controlling the splice-verification-hole diameter 160 of each one of the splice-verification holes 158 to be within the predetermined hole-diameter tolerance 130. The predetermined hole-diameter tolerance 130 is less than or equal to the maximum allowable dimension 122 of the gap 118 between the splice surface 120 and each one of the first-structure surface 110 and the second-structure surface 112. Controlling the splice-verification-hole diameters 160 of the splice-verification holes 158 ensures that the maximum variation in the values of the splice-verification-hole diameters 160 is less than or equal to the maximum allowable value for the dimension of the gap 118.

In one or more examples, the step of (block 3042) machining the structure-verification holes 132 includes machining a plurality of the structure-verification holes 132 in the first stringer 1230 that is coupled to the first-barrel-section surface 1224 and in the second stringer 1232 that is coupled to the second-barrel-section surface 1226. In these examples, the step of (block 3020) measuring the structure-surface profiles 136 includes measuring the structure-surface profiles 136 of the first-stringer surface 1234 of the first stringer 1230 and the second-stringer surface 1236 of the second stringer 1232. The step of (block 3022) measuring the structure-verification-hole diameters 134 of the structure-verification holes 132 includes measuring the structure-verification-hole diameters 134 of the structure-verification holes 132 in the first stringer 1230 and the second stringer 1232. The step of (block 3024) measuring the structure-verification-hole locations 138 of the structure-verification holes 132 includes a step of measuring the structure-verification-hole locations 138 of the structure-verification holes 132 in the first stringer 1230 and the second stringer 1232. The step of (block 3026) measuring the structure-verification-hole axis vectors 140 of the structure-verification holes 132 includes a step of measuring the structure-verification-hole axis vectors 140 of the structure-verification holes 132 in the first stringer 1230 and the second stringer 1232.

In one or more examples, the step of (block 3038) fabricating the splice 102 includes a step of machining the splice surface 120 to have the splice-surface profile 216 that is complementary to the structure-surface profiles 136 of the first-stringer surface 1234 and the second-stringer surface 1236. In these examples, a portion of the splice-verification holes 158 in the splice 102 are machined (e.g., block 3024) such that the splice-verification holes 158 include the splice-verification-hole diameters 160 that are equal to the structure-verification-hole diameters 134 of the structure-verification holes 132 in the first stringer 1230 and the second stringer 1232. A portion of the splice-verification holes 158 in the splice 102 are machined (e.g., block 3024) such that the splice-verification-hole locations 162 correspond to the structure-verification-hole locations 138 of the structure-verification holes 132 in the first stringer 1230 and the second stringer 1232. A portion of the splice-verification holes 158 in the splice 102 are machined (e.g., block 3024) such that the splice-verification-hole axis vectors 164 are equal to the structure-verification-hole axis vectors 140 of the structure-verification holes 132 in the first stringer 1230 and the second stringer 1232.

In one or more examples, the splice 102 is fabricated according to the method 3000. In one or more examples, the splice 102 includes the splice body 178. The splice 102 includes a plurality of the splice arms 180 that extend from the splice body 178. The splice 102 includes a plurality of the splice-verification holes 158 that are formed through the splice body 178 and one or more of the splice arms 180.

In one or more examples, the fuselage 1216 of the aircraft 1200 is assembled according to the method 3000.

Referring to Figs. 4A-9, 13A, 13B and 16, disclosed are examples of the splice 102 for joining the structures 176. For example, the splice 102 is a circumferential splice that joins barrel sections 1218 of the fuselage 1216 of the aircraft the splice 102 along a circumferential joint between the barrel sections 1218.

In one or more examples, the splice 102 includes the splice body 178. The splice 102 includes a plurality of the splice arms 180 that extend from the splice body 178. The splice 102 includes a plurality of the splice-verification holes 158 formed through the splice body 178 and one or more of the splice arms 180. The splice 102 includes the splice surface 120 formed by the splice body 178 and the splice arms 180. The splice surface 120 has a splice-surface profile 216 that is complementary to the structure-surface profiles 136 of the structure surfaces 186 of the structures 176 along the joint 114 between the structures 176. The splice-verification holes 158 include the splice-verification-hole diameters 160 that are equal to structure-verification-hole diameters 134 of structure-verification holes 132 formed through the structures 176. The splice-verification holes 158 include the splice-verification-hole locations 162 that correspond to structure-verification-hole locations 138 of the structure-verification holes 132 formed through the structures 176. The splice-verification holes 158 include the splice-verification-hole axis vectors 164 that are equal to structure-verification-hole axis vectors 140 of the structure-verification holes 132 formed through the structures 176. The splice 102 is configured to be installed along the joint 114 between the structures 176 by aligning the splice-verification holes 158 with the structure-verification holes 132. When installed, the splice 102 self-verifies that the gap 118 between the splice surface 120 of the splice 102 and the structure surfaces 186 of the structures 176 is less than or equal to a maximum allowable dimension 122 of the gap 118.

In one or more examples, the splice-verification-hole diameters 160 of the splice-verification holes 158 are controlled to be within the predetermined hole-diameter tolerance 130. The predetermined hole-diameter tolerance 130 is less than or equal to the maximum allowable dimension 122 of the gap 118 between the splice surface 120 and the structure surfaces 186.

In one or more examples, the splice-verification-hole locations 162 of the splice-verification holes 158 are controlled to be within the predetermined hole-location tolerance 212. The predetermined hole-location tolerance 212 is less than or equal to the maximum allowable dimension 122 of the gap 118 between the splice surface 120 and the structure surfaces 186.

In one or more examples, the splice-verification-hole axis vectors 164 of the splice-verification holes 158 are controlled to be within the predetermined hole-vector tolerance 218. The predetermined hole-vector tolerance 218 is less than or equal to the maximum allowable dimension 122 of the gap 118 between the splice surface 120 and the structure surfaces 186.

In one or more examples, the splice 102 is fabricated based on the splice model 152. The splice model 152 is generated using the as-built model 150 of the structures 176.

In one or more examples, the as-built model 150 includes the first-structure model 146 and the second-structure model 148 that are transformed to represent the structures 176 in the assembly position 144. The first-structure model 146 and the second-structure model 148 are generated by measuring the structure-surface profiles 136 of the structure surfaces 186 of the structures 176. The first-structure model 146 and the second-structure model 148 are generated by measuring the structure-verification-hole diameters 134 of the structure-verification holes 132 in the structures 176. The first-structure model 146 and the second-structure model 148 are generated by measuring the structure-verification-hole locations 138 of the structure-verification holes 132 in the structures 176. The first-structure model 146 and the second-structure model 148 are generated by measuring the structure-verification-hole axis vectors 140 of the structure-verification holes 132 in the structures 176.

Referring now to Figs. 13A and 13B, disclosed are examples of a system 100 for manufacturing the splice 102 used to join the structures 176. The system 100 includes a number of operational components. In one or more examples, the system 100 is used to implement the method 2000 and/or certain operations of the method 1000 and the method 3000. The following are examples of the system 100, according to the present disclosure. Not all of the elements, features, and/or components described in one example are required in that example. Some or all of the elements, features, and/or components described in one example can be combined with other examples in various ways without the need to include other elements, features, and/or components described in those other examples, even though such combination or combinations are not explicitly described or illustrated by example herein.

In one or more examples, the system 100 includes the metrology device 190. The metrology device 190 is operable to measure the first-structure surface 110 of the first structure 106 and the second-structure surface 112 of the second structure 108.

In one or more examples, the system 100 includes the computer 182. The computer 182 is programmed to analyze the measurements 104 from the metrology device 190. The computer 182 is programmed to determine the structure-surface profiles 136 of the first-structure surface 110 and the second-structure surface 112. The computer 182 is programmed to determine the structure-verification-hole diameters 134 of structure-verification holes 132 in the first structure 106 and the second structure 108. The computer 182 is programmed to determine the structure-verification-hole locations 138 of the structure-verification holes 132 in the first structure 106 and the second structure 108. The computer 182 is programmed to determine the structure-verification-hole axis vectors 140 of the structure-verification holes 132 in the first structure 106 and the second structure 108.

The system 100 includes the computer numerical control machine 192 (also referred to as CNC machine 192). The computer numerical control machine 192 is operable to machine the splice surface 120 of the splice 102 to have the splice-surface profile 216 that is complementary to the structure-surface profiles 136 of the first-structure surface 110 and the second-structure surface 112. The computer numerical control machine 192 is operable to machine a plurality of the splice-verification holes 158 in the splice 102. The splice-verification holes 158 are machined in the splice 102 to include the splice-verification-hole diameters 160 that are equal to the structure-verification-hole diameters 134 of the structure-verification holes 132. The splice-verification holes 158 are machined in the splice 102 to include the splice-verification-hole locations 162 that correspond to the structure-verification-hole locations 138 of the structure-verification holes 132. The splice-verification holes 158 are machined in the splice 102 to include the splice-verification-hole axis vectors 164 that are equal to the structure-verification-hole axis vectors 140 of the structure-verification holes 132.

In one or more examples, the computer numerical control machine 192 is operable to machining the structure-verification holes 132 in the first structure 106 and in the second structure 108.

In one or more examples, the structure-verification-hole diameters 134 of the structure-verification holes 132 and the splice-verification-hole diameters 160 of the splice-verification holes 158 are controlled to be within the predetermined hole-diameter tolerance 130. The predetermined hole-diameter tolerance 130 is less than or equal to the maximum allowable dimension 122 of the gap 118 between the splice surface 120 and each one of the first-structure surface 110 and the second-structure surface 112.

In one or more examples, the structure-verification-hole locations 138 of the structure-verification holes 132 and the splice-verification-hole locations 162 of the splice-verification holes 158 are controlled to be within the predetermined hole-location tolerance 212. The predetermined hole-location tolerance 212 is less than or equal to the maximum allowable dimension 122 of the gap 118 between the splice surface 120 and each one of the first-structure surface 110 and the second-structure surface 112.

In one or more examples, the structure-verification-hole axis vectors 140 of the structure-verification holes 132 and the splice-verification-hole axis vectors 164 of the splice-verification holes 158 are controlled to be within the predetermined hole-vector tolerance 218. The predetermined hole-vector tolerance 218 is less than or equal to the maximum allowable dimension 122 of the gap 118 between the splice surface 120 and each one of the first-structure surface 110 and the second-structure surface 112.

In one or more examples, the system 100 includes fixtures 194 that hold the first structure 106 and the second structure 108 while being measured by the metrology device 190.

In one or more examples, certain operations described herein as being performed by the system 100 and/or according to the method 1000, the method 2000, and/or the method 3000 such as various data-processing operations used to analyze data and evaluate surface characteristics represented by the data, are performed using the computer 182. In one or more examples, the computer 182 includes one or more computers, controllers, or combinations thereof. In one or more examples, the computer 182 serves as an analysis environment and is programmed to perform various operations of the system 100 and/or the method 1000, the method 2000, and/or the method 3000. In one or more examples, the computer 182 executes one or more software programs or applications. In one or more examples, the computer 182 includes or takes the form of the data processing system 900 (Fig. 14) that includes the processor 904 and the memory 906 having one or more instances of the program code 918 stored thereon. Accordingly, for the purpose of the present disclosure, general reference to the computer 182 may, in some examples, refer to the data processing system 900, components of the data processing system 900, or the instructions 184 (e.g., data-processing modules and/or program code applications) that are implemented or executed by the data processing system 900.

Referring generally to Figs. 1-13 and particularly to Fig. 14, disclosed are examples of a computer program product 922. The computer program product 922 includes the instructions 184 (e.g., program code 918) read and executed by the computer 182. In one or more examples, when executed by the computer 182, the instructions cause the computer 182 to perform at least some of the operations or steps associated with the method 1000. In one or more examples, when executed by the computer 182, the instructions cause the computer 182 to perform at least some of the operations or steps associated with the method 2000. In one or more examples, when executed by the computer 182, the instructions cause the computer 182 to perform at least some of the operations or steps associated with the method 3000.

Referring generally to Figs. 1-13 and particularly to Fig. 14, disclosed are examples of the data processing system 900. In one or more examples, the data processing system 900 includes means for carrying out at least some of the operations or steps associated with the method 1000. In one or more examples, the data processing system 900 includes means for carrying out at least some of the operations or steps associated with the method 2000. In one or more examples, the data processing system 900 includes means for carrying out at least some of the operations or steps associated with the method 3000.

Referring generally to Figs. 1-13 and particularly to Fig. 14, disclosed are examples of a computer-readable media 920. The computer-readable media 920 includes the program code 918 that, when executed by the processor 904, causes the processor 904 to carry out at least some of the operations or steps associated with the method 1000. The computer-readable media 920 includes the program code 918 that, when executed by the processor 904, causes the processor 904 to carry out at least some of the operations or steps associated with the method 2000. The computer-readable media 920 includes the program code 918 that, when executed by the processor 904, causes the processor 904 to carry out at least some of the operations or steps associated with the method 3000.

Referring generally to Figs. 13A and 13B and particularly to Fig. 14, which schematically illustrates an example of the data processing system 900. For example, the data processing system 900 can be used to implement the computer 182 (Fig. 12) or other computer-implemented components of the system 100 (Figs. 13A and 13B). The following are examples of the data processing system 900, according to the present disclosure. Examples of the data processing system 900 includes various operational or functional elements, features, and/or components. Not all of the elements, features, and/or components described in one example are required in that example. Some or all of the elements, features, and/or components described in one example can be combined with other examples in various ways without the need to include other elements, features, and/or components described in those other examples, even though such combination or combinations are not explicitly described or illustrated by example herein.

In one or more examples, the data processing system 900 includes the processor 904, the memory 906, and at least one program code 918. The memory 906 stores the program code 918. When executed by the processor 904, the program code 918 causes the processor 904 to perform one or more of the operations or steps described herein with respect to the system 100 (Figs. 13A and 13B).

In one or more examples, when executed by the processor 904, the program code 918 causes the processor 904 to perform one or more of the operations or steps for implementation of the method 1000 (Fig. 10). In one or more examples, when executed by the processor 904, the program code 918 causes the processor 904 to perform one or more of the operations or steps for implementation of the method 2000 (Fig. 11). In one or more examples, when executed by the processor 904, the program code 918 causes the processor 904 to perform one or more of the operations or steps for implementation of the method 3000 (Fig. 12).

Referring to Fig. 14, in one or more examples, the data processing system 900 includes the communications framework 902, which provides communications between the processor 904, storage devices 916, the communications unit 910, the input/output unit 912, and the display 914. In some cases, the communications framework 902 is implemented as a bus system.

In one or more examples, the processor 904 is configured to execute the instructions 184 for software to perform a number of operations. The processor 904 includes at least one of a number of processor units, a multi-processor core, or some other type of processor, depending on the implementation. In some examples, the processor 904 takes the form of a hardware unit, such as a circuit system, an application specific integrated circuit (ASIC), a programmable logic device, or some other suitable type of hardware unit.

In one or more examples, instructions for the operating system, applications, and programs run by the processor 904 are located in the storage devices 916. The storage devices 916 are in communication with the processor 904 through the communications framework 902. As used herein, a storage device, also referred to as a computer-readable storage device, is any piece of hardware capable of storing information on a temporary basis, a permanent basis, or both. This information may include, but is not limited to, data, program code, other information, or some combination thereof.

The memory 906 and a persistent storage 908 are examples of the storage devices 916. In one or more examples, the memory 906 takes the form of, for example, a random-access memory or some type of volatile or non-volatile storage device. In one or more examples, the persistent storage 908 includes any number of components or devices. For example, the persistent storage 908 includes a hard drive, a flash memory, a rewritable optical disk, a rewritable magnetic tape, or some combination of the above. The media used by the persistent storage 908 may or may not be removable.

The communications unit 910 allows the data processing system 900 to communicate with other data processing systems, other computer-implemented devices, or both, such as the metrology device 190, the CNC machine 192, the fixtures 194, the end effector 206, the drill 214, the robotic manipulator 208, and the like. The communications unit 910 may provide communications using physical communications links, wireless communications links, or both.

The input/output unit 912 allows input to be received from and output to be sent to other devices connected to the data processing system 900. As an example, the input/output unit 912 enables user input to be received, for example, through a keyboard, a mouse, some other type of input device, or a combination thereof connected to the data processing system 900. As another example, the input/output unit 912 enables output to be sent, for example, to a printer or the display 914 connected to the data processing system 900.

The display 914 is configured to display information to a user. The display 914 may include, for example, without limitation, a monitor, a touch screen, a laser display, a holographic display, a virtual display device, some other type of display device, or a combination thereof.

In this illustrative example, the processes of the different illustrative embodiments are performed by the processor 904 using computer-implemented instructions. These instructions are referred to as program code, computer-usable program code, or computer-readable program code and are read and/or executed by the processor 904.

In these examples, the program code 918 is located in a functional form on computer-readable media 920, which is selectively removable, and may be loaded onto or transferred to the data processing system 900 for execution by the processor 904. The program code 918 and the computer-readable media 920 together form a computer program product 922. In the illustrative example, the computer-readable media 920 is a computer-readable storage media 924 or a computer-readable signal media.

In one or more examples, the computer-readable storage media 924 is a physical or tangible storage device used to store the program code 918 rather than a medium that propagates or transmits the program code 918. The computer-readable storage media 924 is, for example, without limitation, an optical or magnetic disk or a persistent storage device that is connected to the data processing system 900.

Alternatively, the program code 918 can be transferred to the data processing system 900 using the computer-readable signal media. The computer-readable signal media can be, for example, a propagated data signal containing the program code 918. This data signal may be an electromagnetic signal, an optical signal, or some other type of signal that can be transmitted over physical communications links, wireless communications links, or both.

The illustration of the data processing system 900 in Fig. 14 is not meant to provide architectural limitations to the manner in which the illustrative embodiments may be implemented. The different illustrative examples may be implemented in a data processing system that includes components in addition to or in place of those illustrated for the data processing system 900. Further, components shown in Fig. 14 may be varied from the illustrative examples shown.

Referring now to Figs. 15 and 16, examples of the system 100, the splice 102, the method 1000, the method 2000, and/or the method 3000 described herein, may be related to, or used in the context of, the aircraft manufacturing and service method 1100, as shown in the flow diagram of Fig. 15 and the aircraft 1200, as schematically illustrated in Fig. 16. As an example, the aircraft 1200 and/or the aircraft production and service method 1100 may include one or more structures, such as fuselage barrel sections, having been joined using the splice 102.

Referring to Fig. 16, which illustrates an example of the aircraft 1200. In one or more examples, the aircraft 1200 includes the airframe 1202 having the interior 1206. The aircraft 1200 includes a plurality of onboard systems 1204 (e.g., high-level systems). Examples of the onboard systems 1204 of the aircraft 1200 include propulsion systems 1208, hydraulic systems 1212, electrical systems 1210, and environmental systems 1214. In other examples, the onboard systems 1204 also includes one or more control systems coupled to the airframe 1202 of the aircraft 1200. In yet other examples, the onboard systems 1204 also include one or more other systems, such as, but not limited to, communications systems, avionics systems, software distribution systems, network communications systems, passenger information/entertainment systems, guidance systems, radar systems, weapons systems, and the like. One or more components of the aircraft 1200 are joined using the splice 102 as disclosed herein.

Referring to Fig. 15, during pre-production of the aircraft 1200, the manufacturing and service method 1100 includes specification and design of the aircraft 1200 (block 1102) and material procurement (block 1104). During production of the aircraft 1200, component and subassembly manufacturing (block 1106) and system integration (block 1108) of the aircraft 1200 take place. Thereafter, the aircraft 1200 goes through certification and delivery (block 1110) to be placed in service (block 1112). Routine maintenance and service (block 1114) includes modification, reconfiguration, refurbishment, etc. of one or more systems of the aircraft 1200.

Each of the processes of the manufacturing and service method 1100 illustrated in Fig. 15 may be performed or carried out by a system integrator, a third party, and/or an operator (e.g., a customer). For the purposes of this description, a system integrator may include, without limitation, any number of spacecraft manufacturers and major-system subcontractors; a third party may include, without limitation, any number of vendors, subcontractors, and suppliers; and an operator may be an airline, leasing company, military entity, service organization, and so on.

Examples of the system 100, the splice 102, the method 1000, the method 2000, and the method 3000 shown and described herein, may be employed during any one or more of the stages of the manufacturing and service method 1100 shown in the flow diagram illustrated by Fig. 15. In an example, structures of the aircraft 1200 that are assembled using the splice 102 may form a portion of component and subassembly manufacturing (block 1106) and/or system integration (block 1108). Further, structures of the aircraft 1200 that are assembled using the splice 102 may be implemented in a manner similar to components or subassemblies prepared while the aircraft 1200 is in service (block 1112). Also, structures of the aircraft 1200 that are assembled using the splice 102 may be utilized during system integration (block 1108) and certification and delivery (block 1110). Similarly, structures of the aircraft 1200 that are assembled using the splice 102 may be utilized, for example and without limitation, while the aircraft 1200 is in service (block 1112) and during maintenance and service (block 1114).

The preceding detailed description refers to the accompanying drawings, which illustrate specific examples described by the present disclosure. Other examples having different structures and operations do not depart from the scope of the present disclosure. Like reference numerals may refer to the same feature, element, or component in the different drawings. Throughout the present disclosure, any one of a plurality of items may be referred to individually as the item and a plurality of items may be referred to collectively as the items and may be referred to with like reference numerals. Moreover, as used herein, a feature, element, component, or step preceded with the word "a" or "an" should be understood as not excluding a plurality of features, elements, components, or steps, unless such exclusion is explicitly recited.

Illustrative, non-exhaustive examples, which may be, but are not necessarily, claimed, of the subject matter according to the present disclosure are provided above. Reference herein to "example" means that one or more feature, structure, element, component, characteristic, and/or operational step described in connection with the example is included in at least one aspect, embodiment, and/or implementation of the subject matter according to the present disclosure. Thus, the phrases "an example," "another example," "one or more examples," and similar language throughout the present disclosure may, but do not necessarily, refer to the same example. Further, the subject matter characterizing any one example may, but does not necessarily, include the subject matter characterizing any other example. Moreover, the subject matter characterizing any one example may be, but is not necessarily, combined with the subject matter characterizing any other example.

As used herein, a system, apparatus, device, structure, article, element, component, or hardware "configured to" perform a specified function is indeed capable of performing the specified function without any alteration, rather than merely having potential to perform the specified function after further modification. In other words, the system, apparatus, device, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, device, structure, article, element, component, or hardware described as being "configured to" perform a particular function may additionally or alternatively be described as being "adapted to" and/or as being "operative to" perform that function.

Unless otherwise indicated, the terms "first," "second," "third," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations. As used herein, the term "and/or" and the "j" symbol includes any and all combinations of one or more of the associated listed items.

For the purpose of this disclosure, the terms "coupled," "coupling," and similar terms refer to two or more elements that are joined, linked, fastened, attached, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the term "approximately" refers to or represents a condition that is close to, but not exactly, the stated condition that still performs the desired function or achieves the desired result. As an example, the term "approximately" refers to a condition that is within an acceptable predetermined tolerance or accuracy, such as to a condition that is within 10% of the stated condition. However, the term "approximately" does not exclude a condition that is exactly the stated condition. As used herein, the term "substantially" refers to a condition that is essentially the stated condition that performs the desired function or achieves the desired result.

Figs. 1-9, 13, 14 and 16, referred to above, may represent functional elements, features, or components thereof and do not necessarily imply any particular structure. Accordingly, modifications, additions and/or omissions may be made to the illustrated structure. Additionally, those skilled in the art will appreciate that not all elements, features, and/or components described and illustrated in Figs. 1-9, 13, 14 and 16, referred to above, need be included in every example and not all elements, features, and/or components described herein are necessarily depicted in each illustrative example. Accordingly, some of the elements, features, and/or components described and illustrated in Figs. 1-9, 13, 14 and 16 may be combined in various ways without the need to include other features described and illustrated in Figs. 1-9, 13, 14 and 16, other drawing figures, and/or the accompanying disclosure, even though such combination or combinations are not explicitly illustrated herein. Similarly, additional features not limited to the examples presented, may be combined with some or all of the features shown and described herein. Unless otherwise explicitly stated, the schematic illustrations of the examples depicted in Figs. 1-9, 13, 14 and 16, referred to above, are not meant to imply structural limitations with respect to the illustrative example. Rather, although one illustrative structure is indicated, it is to be understood that the structure may be modified when appropriate. Accordingly, modifications, additions and/or omissions may be made to the illustrated structure. Furthermore, elements, features, and/or components that serve a similar, or at least substantially similar, purpose are labeled with like numbers in each of Figs. 1-9, 13, 14 and 16, and such elements, features, and/or components may not be discussed in detail herein with reference to each of Figs. 1-9, 13, 14 and 16. Similarly, all elements, features, and/or components may not be labeled in each of Figs. 1-9, 13, 14 and 16, but reference numerals associated therewith may be utilized herein for consistency.

In Figs. 10-12 and 15, referred to above, the blocks may represent operations, steps, and/or portions thereof and lines connecting the various blocks do not imply any particular order or dependency of the operations or portions thereof. It will be understood that not all dependencies among the various disclosed operations are necessarily represented. Figs. 10-12 and 15 and the accompanying disclosure describing the operations of the disclosed methods set forth herein should not be interpreted as necessarily determining a sequence in which the operations are to be performed. Rather, although one illustrative order is indicated, it is to be understood that the sequence of the operations may be modified when appropriate. Accordingly, modifications, additions and/or omissions may be made to the operations illustrated and certain operations may be performed in a different order or simultaneously. Additionally, those skilled in the art will appreciate that not all operations described need be performed.

Further, references throughout the present specification to features, advantages, or similar language used herein do not imply that all of the features and advantages that may be realized with the examples disclosed herein should be, or are in, any single example. Rather, language referring to the features and advantages is understood to mean that a specific feature, advantage, or characteristic described in connection with an example is included in at least one example. Thus, discussion of features, advantages, and similar language used throughout the present disclosure may, but do not necessarily, refer to the same example.

The described features, advantages, and characteristics of one example may be combined in any suitable manner in one or more other examples. One skilled in the relevant art will recognize that the examples described herein may be practiced without one or more of the specific features or advantages of a particular example. In other instances, additional features and advantages may be recognized in certain examples that may not be present in all examples. Furthermore, although various examples of the methods 1000, 2000, and 3000, the system 100, and the splice 102, as well as various examples of the data processing system 900, the computer program product 922, and the computer-readable storage media 924 used to implement the methods 1000, 2000, and 3000 and the system 100 have been shown and described, modifications may occur to those skilled in the art upon reading the specification.

Further, the present disclosure comprises aspects according to the following clauses.

Clause 1. A method for joining structures, the method comprising:
fabricating a splice based on measurements of a first-structure surface of a first structure and a second-structure surface of a second structure along a joint formed between the first structure and the second structure;
installing the splice using a plurality of verification holes formed in the first structure, the second structure, and the splice; and
self-verifying that a gap between a splice surface of the splice and each one of the first-structure surface and the second-structure surface is less than or equal to a maximum allowable dimension of the gap by installing the splice.

Clause 2. The method of Clause 1, wherein each one of the verification holes is a determinate assembly hole.

Clause 3. The method of Clause 1, wherein each one of the verification holes is a precision hole having a diameter that is within a predetermined hole-diameter tolerance.

Clause 4. The method of Clause 3, wherein the predetermined hole-diameter tolerance is less than or equal to the maximum allowable dimension of the gap between the splice surface and each one of the first-structure surface and the structure surface.

Clause 5. The method of Clause 1, further comprising:
machining a plurality of structure-verification holes in the first structure and in the second structure; and
measuring the first-structure surface and the second-structure surface along the joint.

Clause 6. The method of Clause 5, wherein each one of the structure-verification holes is a determinate assembly hole.

Clause 7. The method of Clause 5, further comprising controlling a structure-verification-hole diameter of each one of the structure-verification holes to be within a predetermined hole-diameter tolerance.

Clause 8. The method of Clause 7, wherein the predetermined hole-diameter tolerance is less than or equal to the maximum allowable dimension of the gap between the splice surface and each one of the first-structure surface and the second-structure surface.

Clause 9. The method of Clause 5, wherein measuring the first-structure surface and the second-structure surface comprises:
measuring structure-surface profiles of the first-structure surface and the second-structure surface;
measuring structure-verification-hole diameters of the structure-verification holes;
measuring structure-verification-hole locations of the structure-verification holes; and
measuring structure-verification-hole axis vectors of the structure-verification holes.

Clause 10. The method of Clause 9, further comprising:
aligning the first structure and the second structure in a pre-assembly position before measuring the first-structure surface and the second-structure surface along the joint; and
aligning the first structure and the second structure in an assembly position before installing the splice.

Clause 11. The method of Clause 10, further comprising:
generating a first-structure model;
generating a second-structure model;
transforming the first-structure model and the second-structure model;
generating an as-built model that represents the first-structure model and the second-structure model in the assembly position; and
generating a splice model using the as-built model, wherein the splice is fabricated using the splice model.

Clause 12. The method of Clause 10, further comprising:
shaping the first structure in a first-assembly shape;
shaping the second structure in a second-assembly shape; and
maintaining the first-assembly shape and the second-assembly shape while aligning the first structure and the second structure in an assembly position; and
maintaining the first-assembly shape and the second-assembly shape while measuring the first-structure surface and the second-structure surface.

Clause 13. The method of Clause 12, further comprising maintaining the first-assembly shape and the second-assembly shape while installing the splice.

Clause 14. The method of Clause 9, wherein fabricating the splice comprises:
machining the splice surface to be complementary to the structure-surface profiles of the first structure and the second structure; and
machining a plurality of splice-verification holes in the splice such that:
   the splice-verification holes have splice-verification-hole diameters that are equal to the structure-verification-hole diameters of the structure-verification holes;
   the splice-verification holes have splice-verification-hole locations that correspond to the structure-verification-hole locations of the structure-verification holes; and
   the splice-verification holes have splice-verification-hole axis vectors that are equal to the structure-verification-hole axis vectors of the structure-verification holes.

Clause 15. The method of Clause 14, wherein each of the splice-verification holes is a determinate assembly hole.

Clause 16. The method of Clause 14, further comprising controlling the splice-verification-hole diameter of each one of the splice-verification holes to be within a predetermined hole-diameter tolerance.

Clause 17. The method of Clause 16, wherein the predetermined hole-diameter tolerance is less than or equal to the maximum allowable dimension of the gap between the splice surface and each one of the first-structure surface and the second-structure surface.

Clause 18. The method of Clause 1, wherein installing the splice comprises installing verification fasteners in the verification holes.

Clause 19. The method of Clause 18, further comprising:
machine a plurality of assembly holes in the first structure, in the second structure, and in the splice; and
installing assembly fasteners in the assembly holes.

Clause 20. The method of Clause 19, further comprising determining a ratio of the verification holes to the assembly holes using a statistical analysis.

Clause 21. The method of Clause 1, wherein:
the first structure comprises a first-barrel section of a fuselage of an aircraft; and
the second structure comprises a second-barrel section of the fuselage.

Clause 22. The method of Clause 21, wherein:
the first-structure surface comprises a first-barrel-section surface of the first-barrel section; and
the second-structure surface comprises a second-barrel-section surface of the second-barrel section.

Clause 23. The method of Clause 22, wherein:
the first-structure surface further comprises a first-stringer surface of a first stringer that is coupled to the first-barrel section; and
the second-structure surface further comprises a second-stringer surface of a second stringer that is coupled to the second-barrel section.

Clause 24. The method of Clause 1, wherein the splice comprises:
a splice body;
a plurality of splice arms that extend from the splice body; and
a plurality of splice-verification holes formed through the splice body and one or more of the splice arms.

Clause 25. A fuselage of an aircraft assembled according to the method of Clause 1.

Clause 26. A method for manufacturing a splice used to join structures, the method comprising:
measuring structure-surface profiles of a first-structure surface of a first structure and a second-structure surface of a second structure;
measuring structure-verification-hole diameters of structure-verification holes in the first structure and the second structure;
measuring structure-verification-hole locations of the structure-verification holes;
measuring structure-verification-hole axis vectors of the structure-verification holes;
machining a splice surface of the splice that is complementary to the structure-surface profiles of the first-structure surface and the second-structure surface; and
machining a plurality of splice-verification holes in the splice such that the splice-verification holes comprise:
   splice-verification-hole diameters that are equal to the structure-verification-hole diameters of the structure-verification holes;
   splice-verification-hole locations that correspond to the structure-verification-hole locations of the structure-verification holes; and
   splice-verification-hole axis vectors that are equal to the structure-verification-hole axis vectors of the structure-verification holes.

Clause 27. The method of Clause 26, further comprising controlling the splice-verification-hole diameters of the splice-verification holes to be within a predetermined hole-diameter tolerance.

Clause 28. The method of Clause 27, wherein the predetermined hole-diameter tolerance is less than or equal to the maximum allowable dimension of a gap between the splice surface and each one of the first-structure surface and the second-structure surface.

Clause 29. The method of Clause 26, further comprising:
generating a first-structure model;
generating a second-structure model;
transforming the first-structure model and the second-structure model;
generating an as-built model that represents the first-structure model and the second-structure model in an assembly position; and
generating a splice model using the as-built model, wherein the splice is machined using the splice model.

Clause 30. The method of Clause 26, further comprising:
shaping the first structure in a first-assembly shape;
shaping the second structure in a second-assembly shape; and
maintaining the first-assembly shape and the second-assembly shape while measuring the first-structure surface and the second-structure surface.

Clause 31. The method of Clause 26, wherein:
the splice comprises:
a splice body; anda plurality of splice arms that extend from the splice body,
the splice-verification holes are formed through the splice body and one or more of the splice arms.

Clause 32. A splice for joining structures fabricated according to the method of Clause 26.

Clause 33. A computer program product comprising instructions that, when executed by a computer, cause the computer to carry out the method of Clause 26.

Clause 34. A data processing system comprising means for carrying out the method of Clause 26.

Clause 35. A computer-readable media comprising program code that, when executed by a processor, causes the processor to carry out the method of Clause 26.

Clause 36. A method for joining barrel sections of a fuselage of an aircraft, the method comprising:
fabricating a splice based on measurements of a first-barrel-section surface of a first-barrel section and a second-barrel-section surface of a second-barrel section along a joint formed between the first-barrel section and the second-barrel section;
installing the splice using a plurality of verification holes formed in the first-barrel section, the second-barrel section, and the splice; and
self-verifying that a gap between a splice surface of the splice and each one of the first-barrel-section surface and the second-barrel-section surface is less than or equal to a maximum allowable dimension of the gap by installing the splice.

Clause 37. The method of Clause 36, wherein:
fabricating the splice is further based on measurements of a first-stringer surface of a first stringer that is coupled to the first-barrel-section surface and of a second-stringer surface of a second stringer that is coupled to the second-barrel-section surface; and
the method further comprises self-verifying that the gap between the splice surface of the splice and each one of the first-stringer surface and the second-stringer surface is less than or equal to the maximum allowable dimension of the gap by installing the splice.

38. The method of Clause 37, wherein installing the splice comprises installing a plurality of verification fasteners in the verification holes.

Clause 39. The method of Clause 37, further comprising:
machining a plurality of assembly holes in the first-barrel section, in the second-barrel section, and in the splice; and
installing a plurality of assembly fasteners in the assembly holes.

Clause 40. The method of Clause 39, further comprising:
machining a plurality of the assembly holes in the first stringer, in the second stringer, and in the splice; and
installing a plurality of the assembly fasteners in the assembly holes.

Clause 41. The method of Clause 39, further comprising:
aligning the first-barrel section and the second-barrel section in a pre-assembly position before measuring the first-barrel-section surface and the second-barrel-section surface; and
aligning the first-barrel section and the second-barrel section in an assembly position before installing the splice.

Clause 42. The method of Clause 41, further comprising:
shaping the first-barrel section in a first-assembly shape;
shaping the second-barrel section in a second-assembly shape; and
maintaining the first-assembly shape and the second-assembly shape while aligning the first-barrel section and the second-barrel section in the assembly position; and
maintaining the first-assembly shape and the second-assembly shape while measuring the first-barrel-section surface and the second-barrel-section surface.

Clause 43. The method of Clause 42, further comprising maintaining the first-assembly shape and the second-assembly shape while installing the splice.

Clause 44. The method of Clause 39, further comprising:
machining a plurality of structure-verification holes in the first-barrel section and in the second-barrel section; and
measuring the first-barrel-section surface and the second-barrel-section surface along the joint.

Clause 45. The method of Clause 44, further comprising controlling a structure-verification-hole diameter of each one of the structure-verification holes to be within a predetermined hole-diameter tolerance.

Clause 46. The method of Clause 44, wherein measuring the first-barrel-section surface and the second-barrel-section surface comprises:
measuring structure-surface profiles of the first-barrel-section surface and the second-barrel-section surface;
measuring structure-verification-hole diameters of the structure-verification holes in the first-barrel section and the second-barrel section;
measuring structure-verification-hole locations of the structure-verification holes in the first-barrel section and the second-barrel section; and
measuring structure-verification-hole axis vectors of the structure-verification holes in the first-barrel section and the second-barrel section.

Clause 47. The method of Clause 46, wherein fabricating the splice comprises:
machining the splice surface to be complementary to the structure-surface profiles of the first-barrel-section surface and the second-barrel-section surface; and
machining a plurality of splice-verification holes in the splice such that the splice-verification holes comprise:
   splice-verification-hole diameters that are equal to the structure-verification-hole diameters of the structure-verification holes in the first-barrel section and the second-barrel section;
   splice-verification-hole locations that correspond to the structure-verification-hole locations of the structure-verification holes in the first-barrel section and the second-barrel section; and
   splice-verification-hole axis vectors that are equal to the structure-verification-hole axis vectors of the structure-verification holes in the first-barrel section and the second-barrel section.

Clause 48. The method of Clause 47, further comprising:
machining a plurality of the structure-verification holes in a first stringer that is coupled to the first-barrel-section surface and in the second stringer that is coupled to the second-barrel-section surface; and
measuring the structure-surface profiles of a first-stringer surface of the first stringer and a second-stringer surface of the second stringer;
measuring the structure-verification-hole diameters of the structure-verification holes in the first stringer and the second stringer;
measuring structure-verification-hole locations of the structure-verification holes in the first stringer and the second stringer; and
measuring structure-verification-hole axis vectors of the structure-verification holes in the first stringer and the second stringer.

Clause 49. The method of Clause 48, wherein fabricating the splice further comprises:
machining the splice surface to be complementary to the structure-surface profiles of the first-stringer surface and the second-stringer surface; and
machining a plurality of the splice-verification holes in the splice such that the splice-verification holes comprise:
   splice-verification-hole diameters that are equal to the structure-verification-hole diameters of the structure-verification holes in the first stringer and the second stringer;
   splice-verification-hole locations that correspond to the structure-verification-hole locations of the structure-verification holes in the first stringer and the second stringer; and
   splice-verification-hole axis vectors that are equal to the structure-verification-hole axis vectors of the structure-verification holes in the first stringer and the second stringer.

Clause 50. The method of Clause 49, wherein:
the splice comprises:
a splice body; and
a plurality of splice arms that extend from the splice body,
the splice-verification holes are formed through the splice body and one or more of the splice arms.

Clause 51. A fuselage of an aircraft assembled according to the method of Clause 33.

Clause 52. A splice for joining structures, the splice comprising:
a splice body;
a plurality of splice arms that extend from the splice body;
a plurality of splice-verification holes formed through the splice body and one or more of the splice arms; and
a splice surface formed by the splice body and the splice arms,
wherein:
   the splice surface is complementary to structure-surface profiles of structure surfaces of the structures along a j oint between the structures;
   the splice-verification holes comprise:
      splice-verification-hole diameters that are equal to structure-verification-hole diameters of structure-verification holes formed through the structures;
   splice-verification-hole locations that correspond to structure-verification-hole locations of the structure-verification holes formed through the structures; and
   splice-verification-hole axis vectors that are equal to structure-verification-hole axis vectors of the structure-verification holes formed through the structures;
   the splice is configured to be installed along the joint between the structures by aligning the splice-verification holes with the structure-verification holes; and
   when installed, the splice self-verifies that a gap between the splice surface of the splice and the structure surfaces of the structures is less than or equal to a maximum allowable dimension of the gap.

Clause 53. The splice of Clause 52, wherein:
the splice-verification-hole diameters of the splice-verification holes are controlled to be within a predetermined hole-diameter tolerance; and
the predetermined hole-diameter tolerance is less than or equal to the maximum allowable dimension of the gap between the splice surface and the structure surfaces.

Clause 54. The splice of Clause 52, wherein:
the splice is fabricated based on a splice model; and
the splice model is generated using an as-built model of the structures.

Clause 55. The splice of Clause 54, wherein:
the as-built model comprises a first-structure model and a second-structure model that are transformed to represent the structures in an assembly position; and
the first-structure model and the second-structure model are generated by:
   measuring the structure-surface profiles of the structure surfaces of the structures;
   measuring the structure-verification-hole diameters of the structure-verification holes in the structures;
   measuring the structure-verification-hole locations of the structure-verification holes in the structures; and
   measuring the structure-verification-hole axis vectors of the structure-verification holes in the structures.

Clause 56. A system for manufacturing a splice used to join structures, the system comprising:
a metrology device that is operable to measure a first-structure surface of a first structure and a second-structure surface of a second structure;
a computer that is programmed to analyze measurements from the metrology device to determine:
   structure-surface profiles of the first-structure surface and the second-structure surface;
   structure-verification-hole diameters of structure-verification holes in the first structure and the second structure;
   structure-verification-hole locations of the structure-verification holes in the first structure and the second structure; and
   structure-verification-hole axis vectors of the structure-verification holes in the first structure and the second structure; and
   a computer numerical control machine that is operable to:
      machine a splice surface of the splice that is complementary to the structure-surface profiles of the first-structure surface and the second-structure surface; and
      machine a plurality of splice-verification holes in the splice that comprise:
         splice-verification-hole diameters that are equal to the structure-verification-hole diameters of the structure-verification holes;
         splice-verification-hole locations that correspond to the structure-verification-hole locations of the structure-verification holes; and
         splice-verification-hole axis vectors that are equal to the structure-verification-hole axis vectors of the structure-verification holes.

Clause 57. The system of Clause 56, wherein the computer numerical control machine is further operable to machining the structure-verification holes in the first structure and in the second structure.

Clause 58. The system of Clause 57, wherein:
the structure-verification-hole diameters of the structure-verification holes and the splice-verification-hole diameters of the splice-verification holes are controlled to be within a predetermined hole-diameter tolerance; and
the predetermined hole-diameter tolerance is less than or equal to the maximum allowable dimension of a gap between the splice surface and each one of the first-structure surface and the second-structure surface.

Clause 59. The system of Clause 56, further comprising fixtures that hold the first structure and the second structure while being measured by the metrology device.

## Claims

1. A method (1000) for joining structures (176), the method (1000) comprising:
fabricating a splice (102) based on measurements (104) of a first-structure surface (110) of a first structure (106) and a second-structure surface (112) of a second structure (108) along a joint (114) formed between the first structure (106) and the second structure (108);
installing the splice (102) using a plurality of verification holes (116) formed in the first structure (106), the second structure (108), and the splice (102); and
self-verifying that a gap (118) between a splice surface (120) of the splice (102) and each one of the first-structure surface (110) and the second-structure surface (112) is less than or equal to a maximum allowable dimension (122) of the gap (118) by installing the splice (102).

2. The method (1000) of Claim 1, wherein each one of the verification holes (116) is a determinate assembly hole (124).

3. The method (1000) of Claim 1, wherein each one of the verification holes (116) is a precision hole (126) having a diameter (128) that is within a predetermined hole-diameter tolerance (130).

4. The method (1000) of Claim 3, wherein the predetermined hole-diameter tolerance (130) is less than or equal to the maximum allowable dimension (122) of the gap (118) between the splice surface (120) and each one of the first-structure surface (110) and the structure surface (112).

5. The method (1000) of any one of the preceding claims, further comprising:
machining a plurality of structure-verification holes (132) in the first structure (106) and in the second structure (108); and
measuring the first-structure surface (110) and the second-structure surface (112) along the joint (114).

6. The method (1000) of any one of the preceding claims, further comprising controlling a structure-verification-hole diameter (134) of each one of the structure-verification holes (132) to be within a predetermined hole-diameter tolerance (130).

7. The method (1000) of Claim 6, wherein the predetermined hole-diameter tolerance (130) is less than or equal to the maximum allowable dimension (122) of the gap (118) between the splice surface (120) and each one of the first-structure surface (110) and the second-structure surface (112).

8. The method (1000) of Claim 5, wherein measuring the first-structure surface (110) and the second-structure surface (112) comprises:
measuring structure-surface profiles (136) of the first-structure surface (110) and the second-structure surface (112);
measuring structure-verification-hole diameters (134) of the structure-verification holes (132);
measuring structure-verification-hole locations (138) of the structure-verification holes (132); and
measuring structure-verification-hole axis vectors (140) of the structure-verification holes (132).

9. The method (1000) of Claim 8, further comprising:
aligning the first structure (106) and the second structure (108) in a pre-assembly position (142) before measuring the first-structure surface (110) and the second-structure surface (112) along the joint (114); and
aligning the first structure (106) and the second structure (108) in an assembly position (144) before installing the splice (102).

10. The method (1000) of Claim 9, further comprising:
generating a first-structure model (146);
generating a second-structure model (148);
transforming the first-structure model (146) and the second-structure model (148);
generating an as-built model (150) that represents the first-structure model (146) and the second-structure model (148) in the assembly position (144); and
generating a splice model (152) using the as-built model (150), wherein the splice (102) is fabricated using the splice model (152).

11. The method (1000) of Claim 9, further comprising:
shaping the first structure (106) in a first-assembly shape (154);
shaping the second structure (108) in a second-assembly shape (156); and
maintaining the first-assembly shape (156) and the second-assembly shape (156) while aligning the first structure (106) and the second structure (108) in an assembly position (144); and
maintaining the first-assembly shape (154) and the second-assembly shape (156) while measuring the first-structure surface (110) and the second-structure surface (112).

12. The method (1000) of Claim 11, further comprising maintaining the first-assembly shape (154) and the second-assembly shape (156) while installing the splice (102).

13. The method (1000) of any one of the preceding claims, wherein fabricating the splice (102) comprises:
machining the splice surface (120) to be complementary to the structure-surface profiles (136) of the first structure (106) and the second structure (108); and
machining a plurality of splice-verification holes (158) in the splice (102) such that:
the splice-verification holes (158) have splice-verification-hole diameters (160) that are equal to the structure-verification-hole diameters (134) of the structure-verification holes (132);
the splice-verification holes (158) have splice-verification-hole locations (162) that correspond to the structure-verification-hole locations (138) of the structure-verification holes (132); and
the splice-verification holes (158) have splice-verification-hole axis vectors (164) that are equal to the structure-verification-hole axis vectors (140) of the structure-verification holes (132).

14. The method (1000) of Claim 13, further comprising controlling the splice-verification-hole diameter (160) of each one of the splice-verification holes (158) to be within a predetermined hole-diameter tolerance (130).

15. A splice (102) for joining structures (176), the splice (102) comprising:
a splice body (178);
a plurality of splice arms (180) that extend from the splice body (178);
a plurality of splice-verification holes (158) formed through the splice body (178) and one or more of the splice arms (180); and
a splice surface (120) formed by the splice body (178) and the splice arms (180),
wherein:
the splice surface (120) is complementary to structure-surface profiles (136) of structure surfaces (186) of the structures (176) along a joint (114) between the structures (176);
the splice-verification holes (158) comprise:
splice-verification-hole diameters (160) that are equal to structure-verification-hole diameters (134) of structure-verification holes (132) formed through the structures (176);
splice-verification-hole locations (162) that correspond to structure-verification-hole locations (138) of the structure-verification holes (132) formed through the structures (176); and
splice-verification-hole axis vectors (164) that are equal to structure-verification-hole axis vectors (140) of the structure-verification holes (132) formed through the structures (176);
the splice (102) is configured to be installed along the joint (114) between the structures (176) by aligning the splice-verification holes (158) with the structure-verification holes (132); and
when installed, the splice (102) self-verifies that a gap (118) between the splice surface (120) of the splice (102) and the structure surfaces (186) of the structures (176) is less than or equal to a maximum allowable dimension (122) of the gap (118).
